# EUROPÄISCHE PATENTSCHRIFT

(11) **EP 4 045 169 B1**
(45) Veröffentlichungstag und Bekanntmachung des Hinweises auf die Patenterteilung: **25.06.2025**
(21) Anmeldenummer: 20790292.5
(22) Anmeldetag: 13.10.2020
(51) Int. Cl.: B01D 46/00, B01D 46/24

(54) **FILTERVORRICHTUNG UND VERFAHREN ZUM ABREINIGEN EINES FILTERELEMENTS EINER FILTERVORRICHTUNG**
FILTER DEVICE AND METHOD OF CLEANING FILTER ELEMENTS OF THE FILTER DEVICE
DISPOSITIF FILTRANT ET METHODE DE NETOYAGE DES ELEMENTS FILTRANT DU DISPOSITIF FILTRANT

(30) Priorität: 15.10.2019 DE 102019127751
(43) Veröffentlichungstag der Anmeldung: 24.08.2022
(73) Patentinhaber: Herding GmbH Filtertechnik, 92224 Amberg (DE)
(72) Erfinder: HERDING, Walter, 92256 Hahnbach (DE); HERDING, Urs, 92224 Amberg (DE); KOLLER, Egid, 92245 Theuern (DE); BETHKE, Dino, 92281 Königstein (DE); HAJEK, Stefan, 92224 Amberg (DE); WEIH, Christoph, 92242 Hirschau (DE)
(74) Vertreter: Schmitt-Nilson Schraud Waibel Wohlfrom Patentanwälte Partnerschaft mbB
(86) Internationale Anmeldenummer: PCT/EP2020/078767
(87) Internationale Veröffentlichungsnummer: WO 2021/074143

(56) Entgegenhaltungen:
- DE-C- 372 967
- DE-C- 903 890
- DE-U1- 202017 104 480
- US-A- 6 077 490
- US-A1- 2002 014 156

## Beschreibung

Die Erfindung betrifft eine Filtervorrichtung sowie ein Verfahren zum Abreinigen eines Filterelements in der Filtervorrichtung.

Solche Filtervorrichtungen werden in der Industrie in Fabriken und Anlagen verschiedenster Industriezweige, zum Beispiel in der Automobilindustrie, der Chemieindustrie, der Lebensmittelindustrie oder bei der Herstellung von Baustoffen, eingesetzt.

Die erfindungsgemäße Filtervorrichtung umfasst wenigstens ein zum Filtern eines Rohfluids ausgebildetes Filterelement mit einer Rohfluidseite und einer Reinfluidseite sowie eine Druckluft-Abreinigungsvorrichtung. Die Druckluft-Abreinigungsvorrichtung ist dazu ausgebildet, Druckimpulse zur Abreinigung von an dem Filterelement anhaftenden Fremdstoffen zu erzeugen.

Das Filterelement weist wenigstens einen auf der Reinfluidseite angeordneten Reinfluidauslass auf, durch welchen gefiltertes Reinfluid aus dem Filterelement herausgeführt wird.

Bei herkömmlichen Filtervorrichtungen sind dem Filterelement eine Mehrzahl von Druckluft-Injektoren zugeordnet, die jeweils einem Reinfluidauslass benachbart so angeordnet sind, dass sie Druckluft entgegen der Strömungsrichtung des Reinfluids direkt und ohne Umlenkung durch den Reinfluidauslass in das Filterelement injizieren.

Aus der EP 2 091 632 B1 ist eine Filtervorrichtung mit einer Abreinigungsvorrichtung bekannt. Die Filtervorrichtung umfasst röhrenförmige Filterelemente aus Metall, Glas oder Keramik, die in einem Filtergehäuse angeordnet sind. Die Abreinigungsvorrichtung arbeitet mit Druckluft, um die röhrenförmigen Filterelemente von Verunreinigungen zu befreien. Ein Drucklufteinlass der Abreinigungsvorrichtung ist so in dem Filtergehäuse angeordnet, dass er über einen Reinfluidsammelkanal direkt und ohne Krümmung vor Reinfluidauslässen der röhrenförmigen Filterelemente endet.

Die US 2002/0014156 A1 zeigt eine Filtervorrichtung mit Filterelementen und einer Druckluft-Abreinigungsvorrichtung. Die Filterelemente weisen einen sich in einer ersten Ebene erstreckenden Reinfluidauslass auf, durch welchen Reinfluid aus dem Filterelement in einen Reinfluidsammelkanal gelangt. Aus dem Reinfluidsammelkanal strömt das Reinfluid durch einen stromabwärts liegenden Reinfluidsammelkanalausass, der mit einem druckabhängig verschließbaren fluiddynamischen Ventil versehen ist. Bei der in D1 gezeigten Filtervorrichtung ist zudem eine Druckluft-Abreinigungsvorrichtung vorgesehen, die durch eine Leitung für einen Rückspül-Luftpuls , ein Ventil zum Erzeugen des Rückspül-Luftpulses und eine hitzebeständiges Absperrventil gebildet wird. Das Absperrventil liegt stromaufwärts der Reinfluidauslässe der Filterelemente, bezogen auf eine Strömungsrichtung von Reinfluid in dem Reinfluidsammelkanal. Bei Öffnen des Absperrventils sorgt der im Reinfluidsammelkanal entstehende Druckimpuls dafür, dass sich das druckabhängig verschließbaren fluiddynamischen Ventil fluiddicht schließt und keine weitere Abströmung von Reinfluid durch den Reinfluidsammelkanalausass mehr zulässt.

Es ist Aufgabe der vorliegenden Erfindung, eine Filtervorrichtung bereitzustellen, die eine weniger aufwändige Abreinigung der Filterelemente bei wenigstens gleichwertigem Abreinigungsergebnis ermöglicht.

Diese Aufgabe wird gelöst durch eine Filtervorrichtung gemäß Anspruch 1 und ein Verfahren gemäß Anspruch 15.

Die erfindungsgemäße Filtervorrichtung weist wenigstens ein zum Filtern eines Rohfluids ausgebildetes Filterelement mit einer Rohfluidseite und einer Reinfluidseite und wenigstens eine Druckluft-Abreinigungsvorrichtung auf. Das Filterelement weist einen auf der Reinfluidseite angeordneten und sich in einer ersten Ebene erstreckenden Reinfluidauslass auf, durch welchen Reinfluid aus dem Filterelement herausgeführt wird. Die Druckluft-Abreinigungsvorrichtung ist dazu ausgebildet, einen Druckimpuls zur Abreinigung von an dem Filterelement anhaftenden Fremdstoffen zu erzeugen und durch den Reinfluidauslass zu dem Filterelement zu führen. Die Druckluft-Abreinigungsvorrichtung ist ferner dazu ausgebildet, den Druckimpuls wenigstens annähernd entlang der ersten Ebene zum Reinfluidauslass zu führen.

Das Reinfluid resultiert aus mit partikelförmigen Fremdstoffen beladenem Rohfluid nach Passieren des Filterelements. Die partikelförmigen Fremdstoffe lagern sich dabei auf der Rohlfuidseite am des Filterelement an. Um diese partikelförmigen Fremdstoffe von dem Filterelement von Zeit zu Zeit zu entfernen, erzeugt die Druckluft-Abreinigungsvorrichtung den Druckimpuls, der entgegen der Strömungsrichtung des vom Filterelement abströmenden Reinfluids zum Filterelement läuft und durch den Reinfluidauslass in das Filterelement eingekoppelt wird. Dieses Prinzip wird auch als Gegenstromimpuls- bzw. Gegendruckimpulsprinzip bezeichnet.

Herkömmlicherweise war es üblich, jedem Filterelement bzw. jeder Reinfluid-Austrittsöffnung eines Filterelements eine eigene Anordnung zur Injektion von Druckluft zuzuordnen, die auf der Reinfluidseite derart angeordnet ist, dass das Filterelement mit Druckluft beaufschlagbar ist, um am Filterelement auf der Rohfluidseite angelagertes Material abzuscheiden. Üblicherweise wurden derartige Abreinigungszyklen, in denen das Filtterelement mit Druckluft beaufschlagt wird, zwischen normalen Filterbetriebszyklen in gewissen zeitlichen Abständen durchgeführt. Die erfindungsgemäße Druckluft-Abreinigungsvorrichtung ist derart ausgebildet, dass durch die Druckluft-Abreinigungsvorrichtung erzeugte Druckimpulse sich
auf der Reinfluidseite entgegen der Strömungsrichtung des vom Filterelement abströmenden Reinfluids zum Filterelement hin bewegen. Das abströmende Reinfluid kann dabei insbesondere als Trägerfluid für die zur Abreinigung erzeugten Druckimpulse dienen, die sich entgegen der Strömungsrichtung des Reinfluids bewegen. Eine Unterbrechung eines gerade ablaufenden Filterbetriebszyklus ist nicht erforderlich. Die Druckimpulse treffen nicht direkt auf die Reinfluidaustrittsöffnung des Filterelements, sondern erreichen diese von der Seite her, so dass die Druckimpulse beim Durchtritt durch die Reinfluidaustrittsöffnung eine Richtungsänderung erfahren. Diese Richtungsänderung kann sehr ausgeprägt sein, insbesondere haben sich günstige Ergebnisse erzielen lassen, wenn die Druckimpulse so zum Filterelement geführt werden, dass sie beim Eintritt durch die Reinfluid-austrittsöffnung eine Richtungsänderung in einem Bereich in der Nähe von 90° Grad erfahren, etwa in einem Bereich zwischen 60° und 120°, insbesondere zwischen 70° und 110°, insbesondere zwischen 80° und 100°. Ein besonders bevorzugter Umlenkwinkel ist 90° oder jedenfalls ein Bereich um 90° herum, etwa zwischen 85° und 95°. In diesem Fall breiten sich die Druckimpulse - jedenfalls in der Umgebung der Reinfluidaustrittsöffnung - in einer Richtung annähernd parallel zu einer Ebene, in der sich die Reinfluidaustrittsöffnung erstreckt, aus. Auf diese Weise ist die effektive Querschnittsfläche der Reinfluidaustrittsöffnung in Projektion der einlaufenden Druckimpulse sehr klein. Im Extremfall kann diese Projektion sogar null sein, oder jedenfalls annähernd null sein, wenn die Druckimpulse die Reinfluidaustrittsöffnung in einer Richtung parallel zu der Ebene anlaufen, in der sich die Reinfluidaustrittsöffnung erstreckt, und die Druckimpulse beim Durchtritt durch die Reinfluidaustrittsöffnung in einem rechten Winkel umgelenkt werden. Man hat herausgefunden, dass sich selbst bei solchen Bedingungen ein sehr zufriedenstellendes Abreinigungsergebnis für das Filterelement erzielen lässt, und zwar ohne dass für die Erzeugung der Druckimpulse deutlich mehr Energie aufzuwenden wäre. Offenbar gelingt es, die Druckimpulse in einer solchen Weise durch die Reinfluidaustrittsöffnung in das Filterelement einzukoppeln und von der Reinfluidseite her auf das Filterelement zu übertragen, dass auf der Rohfluidseite am Filterelement anhaftende partikelförmige Fremdstoffe von dem Filterelement abfallen.

Ein großer Vorteil der erfindungsgemäß vorgeschlagenen Anordnung der Druckluft-Abreinigungsvorrichtung besteht darin, dass ein einziger Druckimpuls eine Mehrzahl von Reinfluid-Austrittsöffnungen unter nahezu demselben Winkel anlaufen kann. Diese mehreren Reinfluid-Austrittsöffnungen können insbesondere in Laufrichtung eines Druckimpulses hintereinander liegen. Auf diese Weise lässt sich ein einziger Druckimpuls der Druckluft-Abreinigungsvorrichtung so über mehrere hintereinander liegende Reinfluid-Austrittsöffnungen eines Filterelements und/oder mehrerer hintereinander liegender und nebeneinander liegender Filterelemente einkoppeln, dass in allen Filterelementen durch Beaufschlagung mit demselben Druckimpuls ein Abfallen von auf der Rohfluidseite angelagertem Material hervorgerufen werden kann. Bei Filterelementen mit taschenartiger Konfiguration, bei denen mehrere Reinfluid-Abströmbereiche mit jeweils eigener Reinfluid-Austrittsöffnung vorhanden sind, kann ein einziger Druckimpuls der Druckluft-Abreinigungsvorrichtung über jede der Mehrzahl von Reinfluid-Austrittsöffnungen separat eingekoppelt werden. Es ist sogar möglich, mehrere solcher Filterelemente hintereinander anzuordnen, so dass die Reinfluid-Austrittsöffnungen aller Filterelemente nacheinander von dem Druckimpuls erreicht werden. Außerdem können mehrere solcher Reinfluid-Austrittsöffnungen eines Filterelements und/oder mehrere Filterelemente mit je eigener Reinfluid-Austrittsöffnung nebeneinander angeordnet sein, so dass nochmals mehr Reinfluid-Austrittsöffnungen von dem Druckimpuls erreicht werden. Beispielsweise können vier oder fünf Reinfluid-Austrittsöffnungen eines Filterelements und/oder Filterelemente mit je eigener Reinfluid-Austrittsöffnung hintereinander und drei Reinfluid-Austrittsöffnungen eines Filterelements und/oder Filterelemente mit je eigener Reinfluid-Austrittsöffnung nebeneinander angeordnet sein. Auf diese Weise ist eine äußerst effiziente Abreinigung des Filterelements bzw. mehrerer Filterelemente durch einen alle Reinfluid-Austrittsöffnungen nacheinander beaufschlagenden Druckimpuls möglich. Im Betrieb wird man in der Regel dafür sorgen, dass der Druckimpuls in wiederkehrenden Abständen die Reinfluid-Austrittsöffnungen beaufschlagt, um jeweils einen Abreinigungszyklus des zugehörigen Filterelements bzw. der zugehörigen Bereiche des Filterelements durchzuführen.

Wenigstens annähernd entlang der ersten Ebene umfasst einen Winkel in einem Bereich von höchstens plus/minus 30°, insbesondere von höchstens plus/minus 20°, insbesondere von höchstens plus/minus 10° bezogen auf einen kleinsten Winkel zwischen der Richtung des Druckimpulsweges und der ersten Ebene. Selbst mit dieser Ausrichtung des Druckimpulsweges ist eine zufriedenstellende Abreinigung der Filterelemente möglich, obwohl der Druckimpuls durch den verhältnismäßig engen Reinfluidauslass des Filterelements treten muss, und zudem an dieser Stelle noch stark umgelenkt wird, um durch die Reinfluid-Austrittsöffnung in einen Reinfluidraum des Filterelements einzutreten, nämlich zwischen 60° bis zu 90°. Alternativ zu der obigen Beschreibung kann man sagen, dass der Druckuftimpulsweg in einer Umgebung der ersten Ebene in einem Winkel von +/- 30°, insbesondere +/- 20°, insbesondere +/- 10° zu einem Normalenvektor der ersten Ebene verläuft.

Das wenigstens eine Filterelement kann als Starrkörperfilter ausgebildet sein. Beieinem Starrkörperfilter sind Material und Konfiguration so gewählt, dass das Filterelement für sich selbst, d.h. ohne Zuhilfenahme einer externen Stützstruktur, aufgestellt werden kann. Dies verlangt, dass das Filterelement einen Filterkörper mit einer gewissen Eigensteifigkeit besitzt. Starrkörperfilter haben eine hohe Lebensdauer und zeichnen sich durch eine effiziente Filterleistung aus. Insbesondere sind Starrkörperfilter gut dazu geeignet, mit Hilfe der Druckluft-Abreinigungsvorrichtung gereinigt zu werden, da der Starrkörperfilter selbst dem Druckimpuls standhält und denselben gut weiterleitet.

Das wenigstens eine Filterelement kann einen durchströmungsporösen Filterkörper aus einem gesinterten Material aufweisen, wobei das gesinterte Material insbesondere einen gesinterten Kunststoff als Hauptbestandteil aufweist, insbesondere gesinterte Polyethylen-Partikel oder - für Anwendungen bei höheren Betriebstemperaturen - gesinterte Polyphenylensulfid-Partikel als Hauptbestandteil.

Das Filterelement kann die Konfiguration einer Filtertasche oder Filterpatrone haben mit Seitenwänden, die einen Reinfluidraum umschließen und einer offenen Stirnseite, in der der Reinfluidauslass ausgebildet ist, sowie einer dem Reinfluidauslass gegenüber liegenden geschlossenen Stirnseite. In dem Reinfluidraum sammelt sich das Reinfluid nach Passieren einer Wand des Filterelements und wird durch den Reinfluidauslass aus dem Filterelement weg transportiert. Die Filtertasche oder Filterpatrone kann drei, insbesondere vier Seitenwände, sowie wenigstens eine Fußstirnwand, die die Seitenwände miteinander an einem dem Reinfluidauslass gegenüberliegenden Fußende verbindet, aufweisen.

Das Filterelement, insbesondere in der Konfiguration einer Filtertasche oder einer Patrone, kann insbesondere eine kastenartige Gestalt mit zwei breiten Seitenwänden und zwei schmalen Seitenwänden aufweisen, die sich von dem Reinfluidauslass zu einem gegenüberliegenden verschlossenen Fußende erstrecken. Das Fußende kann durch eine Fußstirnwand verschlossen sein. Alternativ können die Seitenwände auch so zueinander geneigt sein, dass sie sich am dem Reinfluidauslass gegenüberliegenden Ende berühren, und somit das Ende verschließen. Der Reinfluidauslass wird in der Regel in einer Kopfstirnwand des Filterelements ausgebildet sein. Ein solches Filterelement kann einen eckigen Querschnitt aufweisen oder einen Querschnitt mit abgerundeten Ecken und/oder Seitenflächen. Das Filterelement kann auch eine röhrenförmige Gestalt annehmen, wobei der Querschnitt des Filterelements oval oder rund ausgebildet sein kann.

Das Filterelement kann so angeordnet sein, dass sich insbesondere die zwei breiten Seitenwände parallel zu der Strömungsrichtung des Reinfluids stromabwärts des Reinfluidauslasses erstrecken. Die breiten Seitenwände können dabei so ausgerichtet sein, dass sie parallel zu der Richtung des von der Druckluft-Abreinigungsvorrichtung erzeugten und zum Reinfluidauslass laufenden Druckimpulses ausgerichtet sind. Bei einer solchen Ausrichtung können am Kopfende des Filterelements mehrere Reinfluidauslässe ausgebildet sein, die in Richtung der breiten Seitenwände aufeinander folgen, beispielsweise in der Konfiguration von mehreren Öffnungen, die jeweils durch die breiten Seitenwände verbindende Stege voneinander getrennt sind. Der Druckimpuls wird dann durch die einzelnen in Laufrichtung des Druckimpulses aufeinander folgenden Reinfluidauslässe bzw. Öffnungen in das Filterelement gelangen.

Das Filterelement kann einstückig ausgebildet sein.

Die Filtervorrichtung kann weiterhin wenigstens einen Reinfluidsammelkanal aufweisen, in den der Reinfluidauslass des Filterelements mündet. Bei einem Filterelement mit mehreren Reinfluidauslässen und/oder bei mehreren hintereinander angeordneten Filterelementen können mehrere Reinfluidauslässe in Strömungsrichtung des vom Filterelement abströmenden Reinfluids hintereinander angeordnet sein, wobei alle diese Reinfluidauslässe in den Reinfluidsammelkanal münden. Der Reinfluidsammelkanal sammelt das Reinfluid, welches aus dem Reinfluidauslass bzw. den Reinfluidauslässen austritt, und leitet das Reinfluid weiter. Der Reinfluidsammelkanal kann sich dabei in seiner Längsausrichtung wenigstens annähernd parallel, insbesondere parallel, zu der ersten Ebene erstrecken. Der Reinfluidsammelkanal kann vorzugsweise ein Hohlkörper sein, der sich von einem ersten geschlossenen Ende zu einem zweiten offenen Ende erstreckt.

Der Reinfluidsammelkanal kann einen Querschnitt aufweisen, der sich in Strömungsrichtung des vom Reinfluidauslass abströmenden Reinfluids vergrößert, jedenfalls solange, bis keine weiteren Reinfluidauslässe mehr in den Reinfluidsammelkanal münden. Insbesondere kann der Reinfluidsammelkanal sich stetig oder gleichmäßig von seinem stromaufwärts liegenden ersten Ende zu seinem stromabwärts liegenden zweiten Ende vergrößern. Mit dem Begriff "stetig" soll zum Ausdruck gebracht werden, dass sich der Querschnitt des Reinfluidsammelkanals stromabwärts kontinuierlich vergrößert. Alternativ ist eine gewisse stufenweise Vergrößerung des Querschnitts denkbar, etwa eine Vergrößerung des Querschnitts um eine vorbestimmte Fläche beim oder nach Passieren eines weiteren Reinfluidauslasses.

Der Reinfluidsammelkanal kann einen viereckigen, weitgehend ovalen oder weitgehend runden Hohlraumquerschnitt aufweisen. Dies sind besonders strömungsgünstige Formen zum Abführen des Reinfluids durch den Reinfluidsammelkanal.

Die Filtervorrichtung kann wenigstens ein, insbesondere zwei oder mehr Filterelemente aufweisen, wobei die Filterelemente in Strömungsrichtung des vom Filterelement abströmenden Reinfluids stromabwärts des Reinfluidauslasses hintereinander, also in Reihe, angeordnet sind. Anders gesprochen können die Filterelemente aufeinander folgend von dem ersten Ende zum zweiten Ende des Reinfluidsammelkanals angeordnet sein. Jedes Filterelement weist wenigstens einen eigenen Reinfluidauslass auf, der in den Reinfluidsammelkanal mündet. Die Filterelemente können jeweils auch mehrere Reinfluidauslässe aufweisen, wie vorangehend beschrieben. Die Reinfluidauslässe sind dabei in Strömungsrichtung des Reinfluids hintereinander angeordnet. Falls gewünscht, können auch einige der Filterelemente so angeordnet sein, dass ihre Reinfluidauslässe einander gegenüber liegend in den Reinfluidsammelkanal münden.

Die Druckluft-Abreinigungsvorrichtung kann einen Druckluftzuführkanal aufweisen, der zu Beaufschlagung des Reinfluidsammelkanals mit Druckimpulsen ausgebildet ist. Der Reinfluidsammelkanal überträgt dann von der Druckluft-Abreinigungsvorrichtung erzeugte Druckimpulse zu dem/den jeweiligen Filterelement(en), dessen/deren Reinfluidauslass/Reinfluidauslässe in den Reinfluidsammelkanal mündet/münden. Es hat sich gezeigt, dass ein Reinfluidsammelkanal mit der hierin beschriebenen Konfiguration im Betrieb der Filtervorrichtung sich hervorragend als Übertragungsmedium für Gegenstrom-Druckimpulse eignet. Der Druckluftzuführkanal kann an einer stromabwärts des letzten Filterelements liegenden Stelle an den Reinfluidsammelkanal ankoppeln, bezogen auf die Strömungsrichtung des vom Filterelement abströmenden Reinfluids stromabwärts des Reinfluidauslasses.

Der Druckluftzuführkanal kann einem Reinfluidsammelkanalauslass zugeordnet sein. An dem Reinfluidsammelkanalauslass verlässt das Reinfluid den Reinfluidsammelkanal und gelangt zu einer nachgelagerten Vorrichtung, z.B. kann das Reinfluid durch den Reinfluidsammelkanalauslass in ein Reinfluidplenum gelangen, von dem aus das Reinfluid abtransportiert und gegebenenfalls einer nachgelagerten Vorrichtung zur Behandlung von Reinfluid zugeführt wird..

Ein Austrittsende für Druckimpulse des Druckluftzuführkanals kann dem Reinfluidsammelkanalauslass über einen Zwischenraum hinweg gegenüber liegend angeordnet sein. Anders gesprochen ist das Austrittsende des Druckluftzuführkanals annähernd axial zu der Erstreckungsrichtung des Reinfluidsammelkanals in seinem an den Reinfluidsammelkanalauslass anschließenden Bereich ausgerichtet. Vom Druckluftsammelkanal ausgehende Druckimpulse gelangen so auf direktem Weg in den Reinfluidsammelkanal.

Es hat sich durch Experimente gezeigt, dass die Größe des Zwischenraums zwischen dem Austrittsende des Druckluftzuführkanals und dem Reinfluidsammelkanalauslass einen Einfluss auf die Effizienz der Abreinigung von Filterelementen nimmt. Insbesondere hat sich herausgestellt, dass es günstig ist, wenn der Zwischenraum so groß gewählt wird, dass der Druckimpuls im Zuge seiner Bewegung zwischen Austrittsende des Druckluftzuführkanals und Reinfluidsammelkanalauslass seine Druckimpulsfläche merklich vergrößert. Auf diese Weise gelingt es, den Druckimpuls mit einer gewissen Verstärkung in den Reinfluidsammelkanal einzukoppeln. Der Abstand zwischen Austrittsende des Druckluftzuführkanals und dem Reinfluidsammelkanalauslass sollte andererseits aber so klein bleiben, dass die Druckimpulsfläche bei Eintritt in den Reinfluidsammelkanal Druckimpuls nicht wesentlich über den Querschnitt des Reinfluidsammelkanalauslasses hinausgeht. Es wird vermutet, dass durch geeignete Dimensionierung des Zwischenraums ein Effekt erzielt werden kann, der dem Prinzip einer Trompete oder Flöte ähnelt. Es werden in dem Zwischenraum befindliche Fluidmassen durch den Druckimpuls angeregt. Durch diese Anregung ist es möglich, dass ein vergleichsweise schwacher Druckimpuls, der den Druckluftzuführkanal verlässt, beim Weg bis zum Reinfluidsammelkanalauslass eine genügend starke Verstärkung erfährt, dass eine gleichbleibende Abreinigungswirkung wie mit herkömmlichen Druckluft-Abreinigungsvorrichtungen werden kann.

Die Druckluft-Abreinigungsvorrichtung kann dazu ausgebildet sein, den Druckimpuls entgegen einer Strömungsrichtung des Reinfluids stromabwärts des Reinfluidauslasses in den Reinfluidsammelkanal einzuleiten.

Die Filtervorrichtung kann wenigstens zwei Reinfluidsammelkanäle mit jeweils wenigstens einem an dem jeweiligen Reinfluidsammelkanal angeordneten Filterelement aufweisen, wobei die wenigstens zwei Reinfluidsammelkanäle in ein gemeinsames Reinfluidplenum münden. Eine solche Vorrichtung kann eine große Menge an Rohfluid filtern. Das Reinfluidplenum kann einen Reinfluidplenumausgang aufweisen, der das Reinfluid ableitet.

Jedem der wenigstens zwei Reinfluidsammelkanäle kann ein entsprechender Druckluftzuführkanal der Druckluft-Abreinigungsvorrichtung zugeordnet sein. Der entsprechende Druckluftzuführkanal kann gegenüber dem entsprechenden Reinfluidsammelkanalauslass des zugeordneten Reinfluidsammelkanals in das Reinfluidplenum münden. Auch wenn mehr als zwei Reinfluidsammelkanäle vorgesehen sind, kann jedem der Reinfluidsammelkanäle eine eigener Druckluftzuführkanal zugeordnet sein, der zu dem jeweiligen Reinfluidsammmelkanalauslass ausgerichtet ist.

An dem Druckluftzuführkanal kann ein Steuerelement, insbesondere ein ansteuerbares Ventil oder eine ansteuerbare Klappe, welches geöffnet oder geschlossen werden kann, angeordnet sein, um eine Druckluftabgabe und damit einen Druckimpuls in den entsprechenden Reinfluidsammelkanal zu steuern bzw. zu regeln.

Der Reinfluidsammelkanal kann über wenigstens eine Filterelementaufnahme verfügen, in die das Filterelement einschiebbar ist. Die Filterelementaufnahme kann so ausgebildet sein, dass das Filterelement von der Reinfluidseite her eingeschoben werden kann, also aus Richtung des Reinfluidsammelkanals. Alternativ kann die Filterelementaufnahme auch so ausgebildet sein, dass das Filterelement von der Rohfluidseite her eingeschoben wird, also aus der Sicht des Reinfluidsammelkanals von außen auf den Reinfluidsammelkanal aufgesetzt wird.

Die Filterelementaufnahme kann eine im Reinfluidsammelkanal ausgebildete Öffnung aufweisen, welche so ausgebildet ist, dass sie mit einem Filterelementkopf des Filterelements zusammenwirkt, so dass der Filterelementkopf in der Öffnung aufnehmbar und dort verankerbar ist. Bei Einbau des Filterelements von der Reinfluidseite her erstreckt sich der Filterkörper des Filterelements durch die Öffnung in den Rohfluidraum. Bei Einbau des Filterelements von der Rohfluidseite her sitzt der Filterelementkopf auf der Öffnung auf, so dass der Reinfluidauslass des Filterelements, der im Filterelementkopf angeordnet ist, mit der Öffnung zusammenwirkt und das Reinfluid durch die Öffnung in den Reinfluidsammelkanal entweichen lassen kann.

Die Öffnung kann einen sich von der Öffnung annähernd orthogonal weg erstreckenden Rahmen aufweisen, welcher die Öffnung ringförmig umgibt. Der Rahmen kann dabei einen Querschnitt entsprechend dem Filterelementkopf des Filterelements aufweisen, so dass der Filterelementkopf in diesen Rahmen einschiebbar ist.

Insbesondere bei Einbau des wenigstens einen Filterelements oder mehrerer Filterelemente von der Reinfluidseite her kann der Reinfluidsammelkanal wenigstens eine der Filterelementaufnahme zugeordnete Montageöffnung aufweisen, durch die das Filterelement in die Filterelementaufnahme einsetzbar ist und/oder aus der Filterelementaufnahme herausnehmbar ist. Hierdurch lässt sich das Filterelement in kurzer Zeit in den Reinfluidsammelkanal einsetzen bzw. austauschen.

Die Montageöffnung kann in einer der Filterelementaufnahme gegenüber liegenden Wand des Reinfluidsammelkanals angeordnet sein. Die Montageöffnung kann mit einer Klappe, einer Tür, einem abnehmbaren Deckel oder einem Schieber verschließbar sein.

Die Filtervorrichtung kann ein Gehäuse aufweisen, welches wenigstens den Reinfluidsammelkanal, und die daran angeordnet Filterelemente umgibt, und die Montageöffnung kann in dem Gehäuse der Filtervorrichtung angeordnet sein. Das Gehäuse grenzt insbesondere einen Rohfluidraum ein. Insbesondere kann eine Gehäusewand oder ein Teil einer Gehäusewand eine der Begrenzungen des Reinfluidsammelkanals bilden.

Der Reinfluidsammelkanal kann Aluminium aufweisen, insbesondere aus Aluminium als Hauptbestandteil gefertigt sein. Alternativ kann der Reinfluidsammelkanal ganz oder teilweise aus Stahlblech, in manchen Anwendungen aus einem nicht rostenden Stahl (VA) wie V2A oder V4A, gefertigt sein. Es ist auch denkbar, den Reinfluidsammelkanal ganz oder teilweise aus Kunststoff zu fertigen, etwa aus PVC. Häufig wird der Reinfluidsammelkanal aus dem gleichem Material gefertigt sein wie ein Filtergehäuse.

Bei einem erfindungsgemäßen Verfahren zum Abreinigen des Filterelements der erfindungsgemäßen Filtervorrichtung wird ein Druckimpuls entgegen einer Strömungsrichtung des vom Filterelement weg strömenden Reinfluids durch einen auf der Reinfluidseite angeordneten und sich in einer ersten Ebene erstreckenden Reinfluidauslass eingeleitet, derart, dass der Druckimpuls beim Passieren des Reinfluidauslasses eine Umlenkung um wenigstens 60°, insbesondere eine Umlenkung um wenigstens annähernd 90° erfährt.

Die Vorteile und Ausführungsformen der erfindungsgemäßen Filtervorrichtung treffen ebenfalls auf das Verfahren zu und werden zur Wahrung der Übersichtlichkeit nicht noch einmal wiederholt.

Die erfindungsgemäße Filtervorrichtung findet insbesondere Anwendung in einer Vorrichtung zur Absaugung von Abgasen, die bei additiver Fertigung von Werkstücken aus pulverförmigen metallischen Ausgangswerkstoffen entstehen, in einer Vorrichtung zur Beseitigung von Rauchgasen, die beim Herstellen von Werkstücken mittels Laser-Sinter-Verfahren erzeugt werden, in einer Vorrichtung zur Beseitigung von Luftverunreinigungen in einer Laserstrahlschweißanlage oder einer sonstigen Schweißrauchabsaugungsanlage, oder in einer Vorrichtung zur Beseitigung von Verunreinigungen in Rauchgasen, insbesondere in Rauchgasen, die bei additiver Fertigung oder in Verbrennungsprozessen anfallen, oder in Anlagen zur Abreinigung von Lackrückständen beim Lackieren mit Nasslack oder Pulverlack. Auch Anwendungen der erfindungsgemäßen Filtervorrichtung zur Filtration von Stäuben und anderen partikelförmigen Verunreinigungen in der Lebensmittelindustrie sind denkbar.

Die Erfindung wird im Folgenden anhand von in den beigefügten Figuren schematisch gezeigten Ausführungsbeispiele näher beschrieben. Dabei zeigt:
Figur 1 eine erfindungsgemäße Filtervorrichtung zusammen mit einem in Strömungsrichtung nachgeschalteten Gebläse in einer dreidimensionalen Ansicht, wobei ein Gehäuse der Filtervorrichtung weggelassen ist;
Figur 2 eine Schnittansicht eines Teils der in Figur 1 gezeigten Filtervorrichtung mit mehreren Filterelementen, die in einen gemeinsamen Reinfluidsammelkanal münden;
Figur 3 eine vergrößerte Schnittansicht eines Teilbereichs der Filtervorrichtung aus Figur 2;
Figur 4 eine dreidimensionale Ansicht eines Teils einer weiteren erfindungsgemäßen Filtervorrichtung mit acht Filterelementen, die in einen gemeinsamen Reinfluidsammelkanal münden;
Figur 5 eine Teilansicht nur der in Figur 4 links der Reinfluidsammelkanals angeordneten Filterelemente mit aufgeschnittener Ansicht des Reinfluidsammelkanals;
Figur 6 eine weitere Teilansicht einer erfindungsgemäßen Filtervorrichtung mit mehreren Reinfluidsammelkanälen;
Figur 7 eine dreidimensionale Ansicht eines Teils einer weiteren erfindungsgemäßen Filtervorrichtung mit zwölf reinfluidseitig eingebauten Filterelementen, die in einen gemeinsamen Reinfluidsammelkanal münden;
Figur 8 eine Teilansicht nur der in Figur 7 am unteren Ende des Reinfluidsammelkanals angeordneten Filterelemente; und
Figur 9 in ihren Teilfiguren 9a), 9b) und 9c) unterschiedliche räumliche Ausrichtungen von Filterelementen in einer erfindungsgemäßen Filtervorrichtung, wobei zusätzlich schematisch angedeutet ist, wie die Filterelemente rohfluidseitig oder reinfluidseitig eingebaut sein können.

In allen Figuren bezeichnen gleiche Bezugszeichen jeweils gleiche oder hinsichtlich ihrer Funktion gleichartige Komponenten. Jede dieser Komponenten wird nur in Bezug auf die Ausführungsform ausführlich erläutert, in der das entsprechende Bezugszeichen zum ersten Mal vorkommt. Es versteht sich, dass entsprechende Ausführungen auch für die übrigen Ausführungsformen gelten, in denen das jeweilige Bezugszeichen zu finden ist. Zur Vermeidung von Wiederholungen wird ausdrücklich auf die entsprechende Beschreibung bei der erstmaligen Verwendung des jeweiligen Bezugszeichens verwiesen, soweit nicht ausdrücklich anderes vermerkt ist.

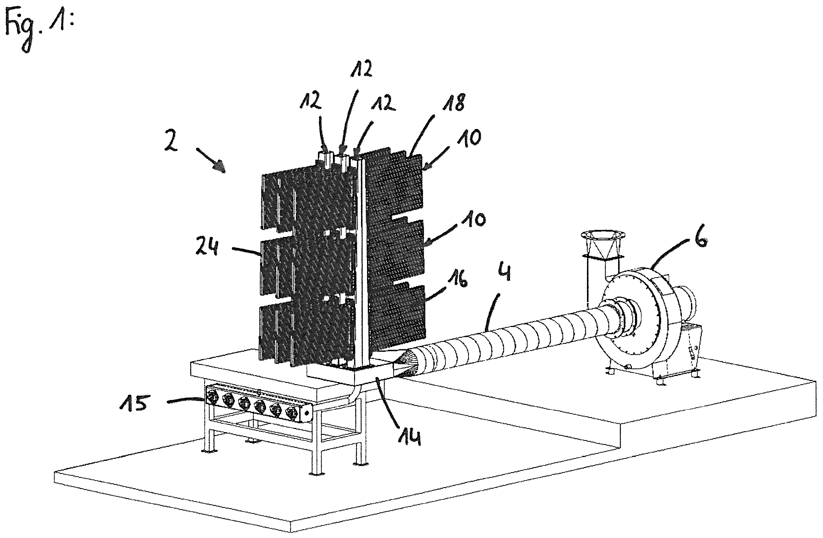

Figur 1 zeigt in einer Teilansicht im Innern eines nicht dargestellten Filtergehäuses angeordnete Komponenten eines Ausführungsbeispiels einer erfindungsgemäßen Filtervorrichtung 2 zur Filterung von mit Fremdkörpern beladenem Fluid, in diesem Fall Luft. Die Filtervorrichtung 1 ist mit einem Ansaugrohr 4 eines der Abführung von Abluft dienenden Gebläses 6 verbunden. Das Gebläse 6 erzeugt einen Unterdruck in dem Ansaugrohr 4, so dass ein mit partikelförmigen Fremdstoffen versehenes Rohfluid, welches sich in einem Rohfluidraum der Filtervorrichtung 2 befindet, durch Filterelemente 10 der Filtervorrichtung 2 gesogen wird. Die Filtervorrichtung 2 filtert dabei die partikelförmigen Fremdstoffe aus dem Rohfluid um ein Reinfluid zu erhalten, welches die Filtervorrichtung 2 über das Ansaugrohr 4 verlässt.

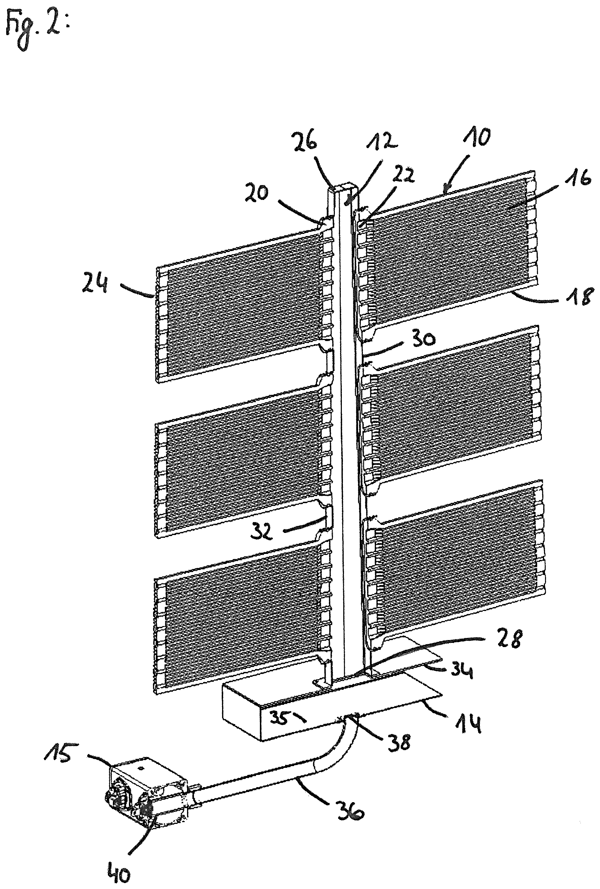

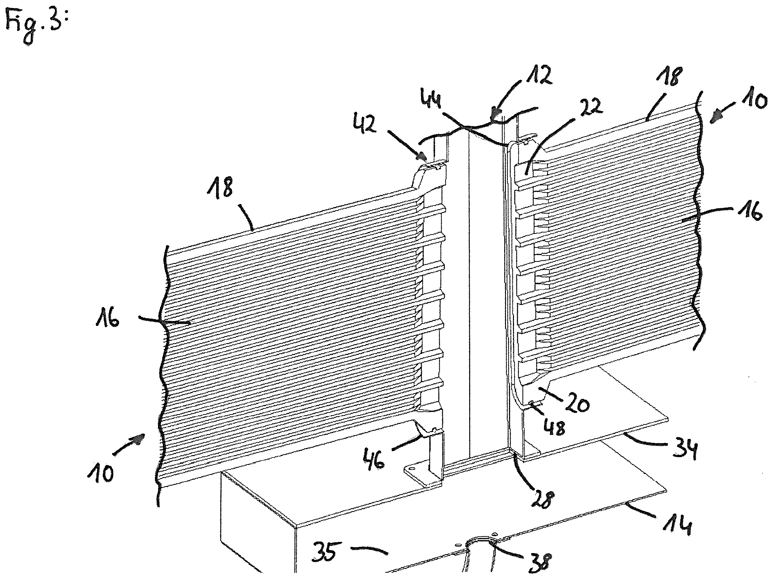

Figur 2 zeigt eine Schnittansicht eines Teils der in Figur 1 gezeigten Filtervorrichtung 2 mit mehreren Filterelementen 10, die in einen gemeinsamen Reinfluidsammelkanal 12 münden. Die Filterelemente 10 des in Figur 2 gezeigten Teils der Filtervorrichtung 2 liegen in einer gemeinsamen Ebene, die auch den Reinfluidsammelkanal 12 enthält, in den alle Filterelemente 10 münden. Wie in Figur 2 gezeigt, liegen alle Filterelemente 10 und der Reinfluidsammelkanal 12 in einer vertikalen Ebene und auch der Reinfluidsammelkanal 12 erstreckt sich in vertikaler Richtung. Die Filterelemente 10 haben jeweils eine kastenförmige Gestalt mit zwei breiten Seitenwänden 16, die durch zwei schmale Seitenwänden 18 miteinander verbunden sind. Die Schnittebene ist eine vertikale Ebene durch die Mitte der Schmalseiten der Filterelemente 10. Die Filterelemente 10 sind beidseits des Reinfluidsammelkanals 12 in Richtung ihrer breiten Seiten vertikal übereinander angeordnet. Am einen stirnseitigen Ende eines jeweiligen Filterelements 10 befindet sich ein Filterelementkopf 20. Dort ist ein Reinfluidauslass 22 ausgebildet. Am in Längsrichtung des Filterelements 10 gegenüber liegenden Fußende ist eine Fußstirnwand 24 ausgebildet. Die Filterelemente 10 münden jeweils über ihren Reinfluidauslass 22 in den Reinfluidsammelkanal 12, wobei die Reinfluidauslässe 22 je zweier auf gleicher Höhe angeordneter Filterelemente 10 einander über den Reinfluidsammelkanal 26 gegenüber liegen. Figur 3 zeigt eine vergrößerte Schnittansicht eines Teilbereichs der Filtervorrichtung aus Figur 2.

Die Filtervorrichtung 2 umfasst im Ausführungsbeispiel mehrere zum Filtern des Rohfluids ausgebildete Filterelemente 10. Die Filterelemente 10 münden jeweils in den Reinfluidsammelkanal 12, in dem das Reinfluid, welches aus den Filterelementen 10 abströmt, in Richtung des Reinfluidsammelkanals 12 (in Figur 2 vertikal nach unten) geleitet wird, bis es durch einen Reinfluidsammelkanalauslass 28 in ein Reinfluidplenum 14 strömt. Nachdem sich das Reinfluid in dem Reinfluidplenum 14 gesammelt hat, strömt es infolge des Gebläses 6 durch das Ansaugrohr 4 aus der Filtervorrichtung 2 aus (siehe Figur 1).

Die Filtervorrichtung 2 weist eine Druckluft-Abreinigungsvorrichtung 15 auf, die Druckimpulse zur Abreinigung von Filteroberflächen der Filterelemente 10 erzeugt und diese über den Reinfluidsammelkanal 12 zu den Reinfluidauslässen 22 der Filterelemente 10 leitet. Durch die Reinfluidauslässe 22 werden die Druckimpulse dann in das jeweils zugeordnete Filterelement 10 eingekoppelt, um das Filterelement 10 mittels der Druckimpulse zur Abreinigung zu beaufschlagen. In dem gezeigten im Ausführungsbeispiel ist die Druckluft-Abreinigungsvorrichtung 15 derart ausgebildet, dass sie unmittelbar nach Erzeugen von Druckimpulsen das Reinfluidplenum 14 mit diesen Druckimpulsen beaufschlagt. Die Druckimpulse wandern dann über das Reinfluidplenum 14 in den Reinfluidsammelkanal 12 und zu den Reinfluidauslässen 22 der einzelnen Filterelemente 10. Die Druckluft-Abreinigungsvorrichtung 15 arbeitet nach dem Gegendruckprinzip. Dabei wird ein Druckstoß oder Druckimpuls durch Druckluft erzeugt, der entgegen der Strömungsrichtung des Reinfluids in die Filtervorrichtung 2 eingeleitet wird. Der Druckimpuls breitet sich durch das Reinfluidplenum 14, den Reinfluidsammelkanal 12 bis zum Filterelement 10 aus und wird durch die Reinfluidaustrittsöffnung auf das Filterelement 10 übertragen. Dies sorgt dafür, dass an dem Filterelement 10 anhaftende Fremdkörper von dem Filterelement 10 abgesprengt werden und auf der Rohfluidseite des Filterelements 10 herunterfallen. Auf diese Weise sorgt die Abreinigung, die im Betrieb der Filtervorrichtung immer wiederkehrend stattfindet, für eine Reinigung der Filterelemente 10 von Zeit und zu Zeit und damit für bessere Filterleistung.

Das Filterelement 10 ist als Starrkörperfilter ausgebildet, welches einen durchströmungsporösen Filterkörper aus einem gesinterten Material aufweist. Das Filterelement 10 hat eine kastenartige Gestalt, mit zwei breiten Seitenwänden 16 und zwei schmalen Seitenwänden 18, wobei in den Figuren häufig nur eine der entsprechenden Seitenwände dargestellt ist. Das Filterelement 10 bildet in seinem Inneren einen Reinfluidraum aus. In Figur 3 sind zwei Filterelemente 10 in Schnittansicht zu sehen, die mit ihrem jeweiligen Filterelementkopf 20 am Reinfluidsammelkanal 12 angeordnet sind, so dass ihre jeweiligen im Filterelementkopf 20 ausgebildeten Reinfluidauslässe 22 in den Reinfluidsammelkanal 12 münden und es dem Reinfluid ermöglichen, aus dem jeweiligen Filterelement 10 abzuströmen. Der Reinfluidauslass 22 kann in mehrere Teil-Reinfluidauslässe unterteilt sein, beispielsweise durch entsprechende Ausgestaltung des Filterelementkopfs 20 mit mehreren die beiden breiten Seitenwände 16 miteinander verbindenden Stegen. An einem dem Reinfluidauslass 22 gegenüberliegenden Ende des Filterelements 10 weist das Filterelement 10 eine Fußstirnwand 24 auf, die das Filterelement 10 auf dieser Seite abschließt. Der Filterelementkopf 20 und die Fußstirnwand 24 sind durch die Seitenwände 16 und 18 miteinander verbunden. Die breiten Seitenwände 16 und normalerweise auch die schmalen Seitenwände 18 sind durchströmungsporös ausgebildet und stellen Filtrationsflächen zur Filterung des Rohfluids bereit. Die Fußstirnwand 24 kann auch durchströmungsporös ausgebildet sein, um die Filtrationsfläche zu maximieren. Alternativ kann die Fußstirnwand auch fluidundurchlässig ausgebildet sein. Weiterhin ist es alternativ möglich, dass die breiten Seitenwände 16 so zueinander ausgerichtet sind, dass sie vom Filterelementkopf 20 in Richtung zum gegenüberliegenden Ende des Filterelements 10 zueinander geneigt sind und am gegenüberliegenden Ende aneinander anliegen, so dass die Fußstirnwand 24 in dieser Alternative überflüssig ist.

In dem gezeigten Ausführungsbeispiel haben die breiten Seitenwände 16 eine lamellenartige Konfiguration und sind zick-zack-artig bzw. wellenartig ausgebildet, um die so gebildete Filtrationsfläche zu vergrößern. Dabei haben die dadurch gebildeten Berge und Täler einen Verlauf grundsätzlich in Längsrichtung des Filterelements 10. Die Berge und Täler flachen in Richtung des Filterelementkopfes 20, insbesondere im Filterelementkopf 20 ab, so dass der Reinfluidauslass 22 im Wesentlichen einen rechteckigen Querschnitt aufweist. Diese lamellenartige Konfiguration ist optional, so dass auch andere Konfigurationen des Filterelements denkbar sind.

In dem in Figur 1 gezeigten Ausführungsbeispiel umfasst die Filtervorrichtung 2 drei parallel nebeneinander angeordnete Reinfluidsammelkanäle 12, die jeweils in vertikaler Richtung verlaufen. An jedem Reinfluidsammelkanal 12 sind sechs Filterelemente 10 angebracht. Es versteht sich, dass die Filtervorrichtung 2 beliebig viele Reinfluidsammelkanäle 12 und Filterelemente 10 aufweisen kann. Die Reinfluidsammelkanäle 12 können in jeder anderen Ausrichtung zueinander angeordnet sein. Jeder der Reinfluidsammelkanäle 12 erstreckt sich grundsätzlich in eine Längsrichtung. In Figur 1 ist die Längsrichtung die vertikale Richtung; die Längsrichtung kann aber auch eine andere Richtung sein. Der Reinfluidauslass 22 des Filterelements 10 ist annähernd parallel zu der Längsrichtung des Reinfluidsammelkanals 12 ausgerichtet, so dass das Reinfluid aus dem Reinfluidauslass 22 annähernd orthogonal zu der Längsrichtung des Reinfluidsammelkanals 12 in den Reinfluidsammelkanal 12 einströmt. Dann wird das Reinfluid umgelenkt und strömt in Längsrichtung des Reinfluidsammelkanals 12 durch den Reinfluidsammelkanal 12.

Der Reinfluidsammelkanal 12 mündet mit dem Reinfluidsammelkanalauslass 28 in das Reinfluidplenum 14. Am dem Reinfluidsammelkanalauslass 28 gegenüberliegenden ersten Ende 26 des Reinfluidsammelkanals 12 ist der Reinfluidsammelkanal 12 verschlossen, vorzugsweise durch eine Stirnwand oder durch einen anderen Verschluss. Der Reinfluidsammelkanal 12 ist als Hohlkörper ausgebildet, der sich von dem ersten Ende 26 zu dem Reinfluidsammelkanalauslass 28 erstreckt. Der Reinfluidsammelkanal 12 hat im Ausführungsbeispiel einen viereckigen Hohlraumquerschnitt, der sich von dem Ende 26 zum Reinfluidsammelkanalauslass 28 stetig vergrößert. Es ist ebenfalls denkbar, dass der Reinfluidsammelkanal 12 einen ovalen oder runden Hohlraumquerschnitt aufweist. Der Reinfluidsammelkanalauslass 28 bildet ein zweites Ende des Reinfluidsammelkanals 12 aus.

Jeweils auf der gleichen Seite des Reinfluidsammelkanals 12 angeordnete Filterelemente 10 sind in Strömungsrichtung des Reinfluids entlang des Reinfluidsammelkanals 12 hintereinander angeordnet. Im Ausführungsbeispiel sind drei Filterelemente 10 in einer ersten Seitenwand 30 des Reinfluidsammelkanals 12 und drei Filterelemente 10 in einer der ersten Seitenwand 30 gegenüberliegenden zweiten Seitenwand 32 des Reinfluidsammelkanals 12 angeordnet. Die Seitenwände 30 und 32 erstrecken sich in Längsrichtung des Reinfluidsammelkanals 12. Das Filterelement 10 ist dabei so an dem Reinfluidsammelkanal 12 angeordnet, dass die zwei breiten Seitenwände 16 des Filterelements 10 parallel zu der Längsrichtung des Reinfluidsammelkanals 12 ausgerichtet sind.

Der Reinfluidsammelkanal 12 mündet mit seinem Reinfluidsammelkanalauslass 28 an einer ersten Seite 34 des Reinfluidplenums 14. An einer der ersten Seite 34 gegenüberliegenden zweiten Seite des Reinfluidplenums 14 ist ein Druckluftzuführkanal 36 mit einem Druckluftzuführkanalauslass 38, derart angeordnet, dass der sich der Druckluftzuführkanalauslass 38 dem Reinfluidsammelkanalauslass 28 gegenüber liegt und ein vom Druckluftzuführkanalauslass 38 ausgehender Druckimpuls zum Reinfluidkanalauslass 28 wandert. Der Druckluftzuführkanal 36 mit dem Druckluftzuführkanalauslass 38 ist so ausgerichtet, dass er Druckluft entlang der Längsrichtung des Reinfluidsammelkanals 12 in den Reinfluidsammelkanal 12 einleitet. Der Druckluftzuführkanal 36 ist mit seinem Druckluftzuführkanalauslass 38 an einer stromabwärts des letzten Filterelements 10 liegenden Stelle angeordnet, bezogen auf die Strömungsrichtung des vom Filterelement 10 abströmenden Reinfluids stromabwärts des Reinfluidauslasses 22. Der Druckluftzuführkanal 36 ist über ein Steuerelement 40, vorzugsweise ein ansteuerbares Ventil, das sich öffnen und schließen lässt, mit einem nicht gezeigten Druckluftgenerator oder einem Druckluftspeicher verbunden. Im Ausführungsbeispiel ist jedem Reinfluidsammelkanal 12 ein entsprechender Druckluftzuführkanal 36 zugeordnet.

Alternativ kann der Druckluftzuführkanal 36 auch mehreren Reinfluidsammelkanälen 12 zugeordnet sein. Zum Beispiel kann sich der Druckluftzuführkanal 36 in einem nicht gezeigten Ausführungsbeispiel an seinem Ende verzweigen und in zwei Druckluftzuführkanalauslässen 38 enden, wobei jeder Druckluftzuführkanalauslass 38 einem Reinfluidsammelkanalauslass 28 gegenüber liegend in das Reinfluidplenum 14mündet. Es ist ebenfalls in einem nicht gezeigten Ausführungsbeispiel denkbar, dass kein Reinfluidplenum 14 zwischen dem Druckluftzuführkanalauslass 38 und dem Reinfluidsammelkanalauslass 28 angeordnet ist.

Wenn eine Abreinigung der Filterelemente 10 erfolgen soll, wird das Steuerelement 40 manuell oder automatisch betätigt. Daraufhin wird ein Druckluftstrom durch den Druckluftzuführkanal 36 und durch den Druckluftzuführkanalauslass 38 in das Reinfluidplenum 14 eingeleitet und erzeugt dort einen Druckimpuls oder Druckstoß. Von dort breitet sich der Druckimpuls durch den Reinfluidsammelkanalauslass 28 in den Reinfluidsammelkanal 12 aus. Beim Reinfluidauslass 22 des Filterelements 10 wird der Druckimpuls um wenigstens 60°, insbesondere von wenigstens annähernd 80°, insbesondere um wenigstens annähernd 90° umgelenkt und erreicht dann den Reinfluidraum des Filterelements 10. Der Druckimpuls wird auf Wände 16, 18 des Filterelements 10 übertragen, wodurch auf der Rohfluidseite der Wände 16, 18 anhaftende Fremdkörper von dem Filterelement 10 abgesprengt werden und eine Abreinigung des Filterelements 10 erfolgt.

Das Reinfluidplenum 14 bildet einen Zwischenraum aus, der den Reinfluidsammelkanalauslass 28 von dem Druckluftzuführkanalauslass 38 beabstandet. Dies hat den Vorteil, dass das Reinfluid, welches sich in dem Reinfluidplenum 14 befindet, verwendet werden kann, um den von dem Druckluftzuführkanalauslass 38 ausgehenden Druckimpuls zu verstärken. Die Verstärkung erfolgt dadurch, dass der Druckimpuls das im Reinfluidplenum 14 befindliche Fluid zu Schwingungen anregt. Mit zunehmendem Abstand zwischen Druckluftzuführkanalauslass 38 und Reinfluidkanalauslass 28 vergrößert sich der Querschnitt des Druckimpulses und damit auch die Menge von durch den Druckimpuls angeregtem Fluid in Reinfluidplenum. Damit kann der Druckimpuls beim Einkoppeln der vom Druckimpuls angeregten Schwingungen des Fluids im Reinfluidplenum 14 in den Reinfluidkanalauslass 28 eine zusätzliche bzw. größere Menge an Reinfluid im Reinfluidsammelkanal 12 beaufschlagen . Durch diese Verstärkung kann der Druckimpuls nach Erreichen und Passieren des jeweiligen Reinfluidauslasses 22 eine gute Abreinigung des jeweiligen Filterelements 10 bewirken.

Der Reinfluidsammelkanal 12 verfügt in dem Ausführungsbeispiel über mehrere Filterelementaufnahmen 42, um die Filterelemente 10 aufzunehmen. Eine jeweilige Filterelementaufnahme 42 weist eine Öffnung 44 auf, durch die das Reinfluid aus dem Filterelement 10 durch den Reinfluidauslass 22 in den Reinfluidsammelkanal 12 gelangt. Um die Öffnung 44 ist ein ringförmiger Kragen 46 oder Rand angeordnet, der sich von dem Reinfluidsammelkanal 12 annähernd orthogonal weg erstreckt. In einer nicht gezeigten Ausführungsform kann sich der Kragen auch annähernd orthogonal in den Reinfluidsammelkanal 12 erstrecken. Der Kragen 46 bildet einen Aufnahmeraum aus, in den der Filterelementkopf 20 des Filterelements 10 einschiebbar ist. Der Aufnahmeraum ist seitlich durch eine Innenfläche des Kragens 46 begrenzt, wobei die Innenfläche mit einer Außenfläche des Filterelementkopfes 20 abdichtend zusammenwirken kann, so dass kein Rohfluid bzw. Reinfluid hierdurch entweichen kann. Die Außenfläche des Filterelementkopfes 20 weist im Ausführungsbeispiel ein Dichtelement 48 auf, wodurch eine nochmals verbesserte Dichtwirkung zwischen der Innenfläche und der Außenfläche möglich ist. Der Reinfluidsammelkanal 12 ist so ausgebildet, dass die Filterelemente 10 von der Rohfluidseite her eingebaut und an den Reinfluidsammelkanal 12 angesetzt werden.

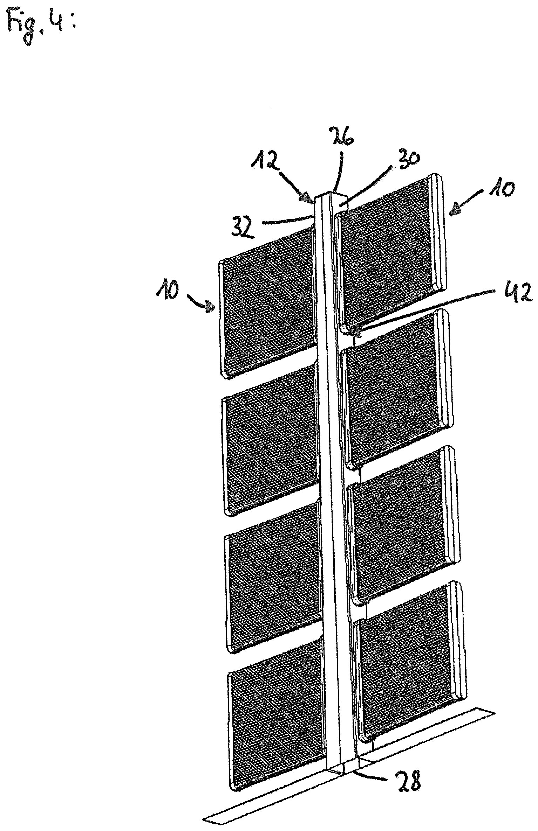

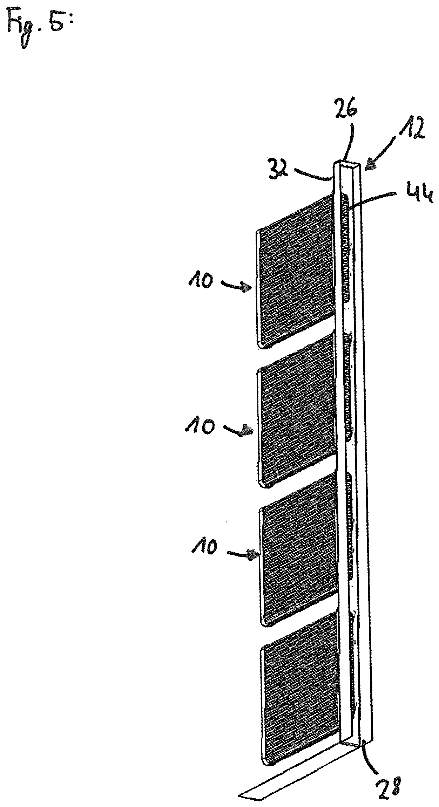

Die Figuren 4 und 5 zeigen den Reinfluidsammelkanal 12 mit acht Filterelementen 10, von denen vier in Längsrichtung an der ersten Seitenwand 30 des Reinfluidsammelkanals 12 in Strömungsrichtung des Reinfluids hintereinander angeordnet sind, und von denen vier weitere Filterelemente 10 in Längsrichtung an der zweiten Seitenwand 32 des Reinfluidsammelkanals 12 in Strömungsrichtung des Reinfluids hintereinander angeordnet sind. Der Reinfluidsammelkanal 12 ist so ausgebildet, dass die Filterelemente 10 von der Rohfluidseite her eingebaut und an den Reinfluidsammelkanal 12 angesetzt werden.

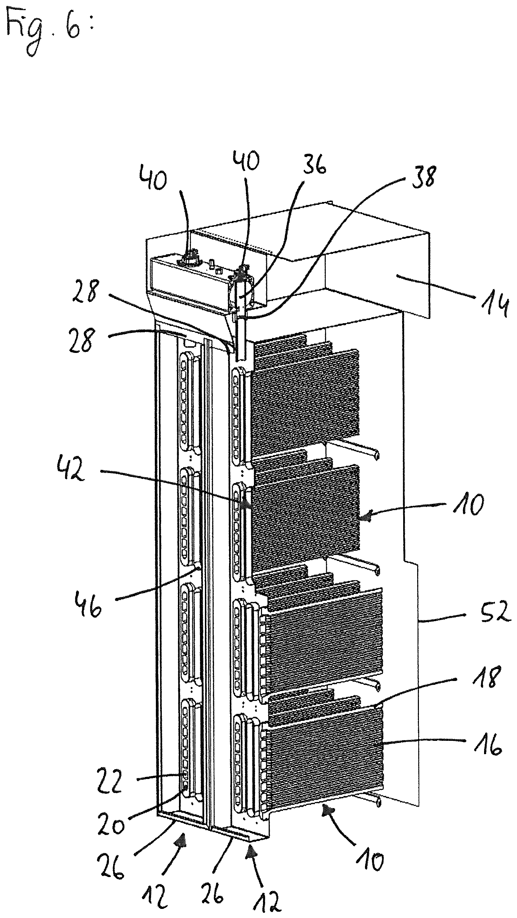

Figur 6 zeigt eine Ausführungsform mit zwei in vertikaler Richtung verlaufenden Reinfluidsammelkanälen 12, die parallel zueinander angeordnet sind. Die Darstellung in Figur 6 entspricht im Wesentlichen der von Figur 5. In Figur 6 ist nur der rechts der Mitte der Reinfluidsammelkanäle 12 liegende Teil der Filterelemente 10 abgebildet, wobei es sich versteht, dass in Wirklichkeit Filterelemente 10 spiegelbildlich von der linken Seite und von der rechten Seite her in den Reinfluidsammelkanal 12 münden. Wie vorangehend ausgeführt, betreffen auch in Figur 6 gleiche Bezugszeichen jeweils gleiche oder gleichartige Komponenten oder Merkmale wie in den vorangehenden Ausführungsformen. Im Folgenden werden lediglich Unterschiede bzw. Besonderheiten der in Figur 6 gezeigten Ausführungsform gegenüber den übrigen Ausführungsformen beschrieben und zur übrigen Beschreibung auf die vorangehenden Ausführungsformen verwiesen.

Wie bei den vorangehenden Ausführungsformen sind an jedem Reinfluidsammelkanal 12 in Längsrichtung des Reinfluidsammelkanals 12 mehrere Filterelemente 10 hintereinander angeordnet und zwar so dass die Filterelemente 10 jeweils in ihrer Breitenrichtung aufeinander folgen. Zusätzlich münden in Figur 6 jeweils drei oder mehrere in Richtung ihrer Schmalseiten nebeneinander angeordnete Filterelemente 10 in denselben Reinfluidsammelkanal 12. In der gezeigten Darstellung mit vier übereinander angeordneten Paaren von Filterelementen 10 münden in jeden Reinfluidsammelkanal 12 also 12 Filterelemente. Der Reinfluidauslass 22 jedes Filterelements 10 mündet in den entsprechenden Reinfluidsammelkanal 12. In Figur 6 münden demnach jeweils zwölf Reinfluidauslässe 22 in einen jeweiligen Reinfluidsammelkanal 12. Jeder Reinfluidsammelkanal 12 weist ein erstes, verschlossenes Ende 26 (in Figur 6 unten) und ein gegenüber liegendes zweites Ende auf, das einen Reinfluidsammelkanalauslass 28 bildet (in Figur 6 oben). Die Reinfluidsammelkanalauslässe 28, 28 münden in ein gemeinsames Reinfluidplenum 14. Gegenüber jedem der Reinfluidsammelkanalauslässe 28 ist jeweils ein Druckluftzuführkanal 36 mit zugehörigem Druckluftkanalauslass 38 angeordnet (der Übersichtlichkeit halber in Figur 6 nur für den rechten Reinfluidsammelkanal 12 mit Bezugszeichen versehen). Über den jeweiligen Druckluftkanalauslass 38 kann ein Druckimpuls über den zugeordneten Reinfluidsammelkanalauslass 28 entgegen der Strömungsrichtung des Reinfluids in den jeweiligen Reinfluidsammelkanal 12 eingekoppelt werden, wie bereits vorangehend beschrieben. Jeder der Druckluftzuführkanäle 36 weist dazu eine Steuereinrichtung 40 auf, mit der der Druckluftzuführkanal 36 geöffnet oder verschlossen werden kann. Die Steuereinrichtung 40 ist vorzugsweise ein ansteuerbares Ventil oder eine ansteuerbare Klappe.

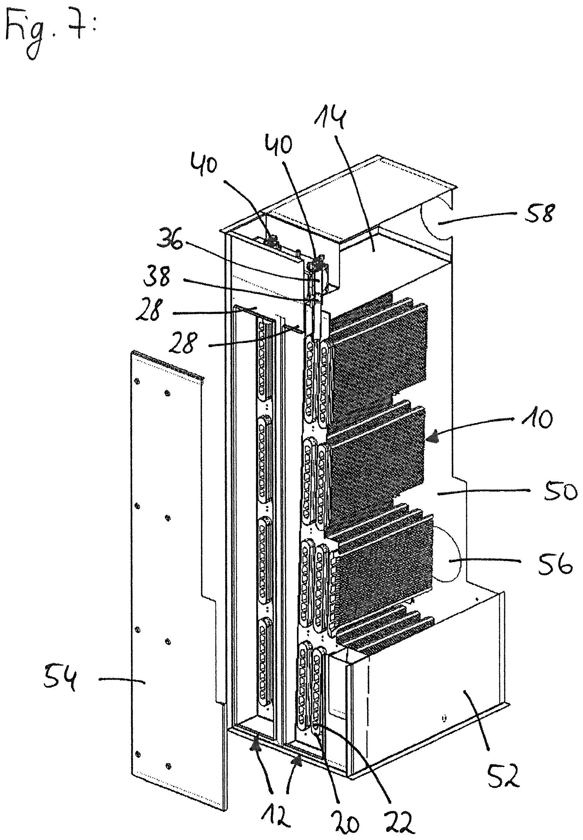

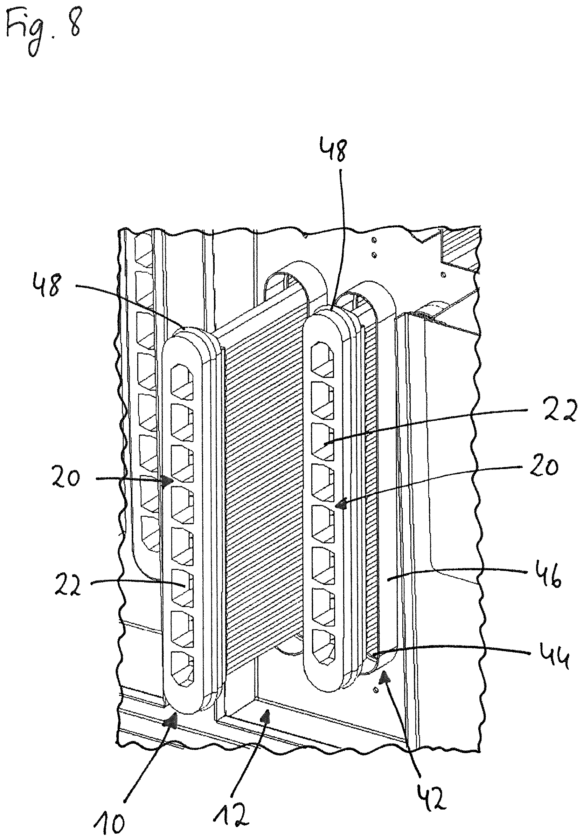

Figur 7 zeigt eine dreidimensionale Ansicht eines Teils einer weiteren Ausführungsform einer erfindungsgemäßen Filtervorrichtung mit zwölf reinfluidseitig eingebauten Filterelementen 10, die in einen gemeinsamen Reinfluidsammelkanal 12 münden. Figur 8 zeigt eine Teilansicht der in Figur 7 am unteren Ende des Reinfluidsammelkanals 12 angeordneten Filterelemente 10.

In Figur 7 sind zwei Reinfluidsammelkanäle 12 gezeigt in die jeweils zwölf Filterelemente 10 reinfluidseitig, d.h. von der Seite des im Reinfluidsammelkanal 12 strömenden Reinfluids her, in die entsprechende Filterelementaufnahme 42 eingeschoben sind. Jede Filterelementaufnahme 42 weist eine in der zugeordneten Wand des Reinfluidsammelkanals 12 ausgebildete Öffnung 44 auf, durch die das jeweilige Filterelement 10 in den Rohfluidraum 50 eines die Filterelemente 10 umgebenden Filtergehäuses 52 einschiebbar ist. Um jede Öffnung 44 ist ein ringförmiger Kragen 46 oder Rand angeordnet, der von der Wand des Reinfluidsammelkanals 12 aus in den Reinfluidsammelkanal 12 annähernd orthogonal hinein ragt. Der Kragen 46 bildet den Aufnahmeraum aus, in den der Filterelementkopf 20 des Filterelements 10 einschiebbar ist. Der Aufnahmeraum ist seitlich durch die Innenfläche des Kragens 46 begrenzt, wobei die Innenfläche des Kragens mit der zugeordneten Außenfläche des Filterelementkopfes 20 abdichtend zusammenwirken kann, so dass kein Rohfluid bzw. Reinfluid hierdurch entweichen kann. Zur Verbesserung der Dichtwirkung weist die Außenfläche des Filterelementkopfes 20 im Ausführungsbeispiel ein Dichtelement 48 auf, beispielsweise einen Dichtring. Der Reinfluidsammelkanal 12 ist so ausgebildet, dass die Filterelemente 10 von der Reinfluidseite her eingebaut und in den Reinfluidsammelkanal 12 eingesetzt werden. Der Reinfluidsammelkanal 12 ist dem Filtergehäuse 52 benachbart angeordnet, so dass eine Seitenwand des Reinfluidsammelkanals 12, die gegenüber der Filterelementaufnahmen 42 angeordnet ist, durch eine Gehäusewand 54 gebildet ist. Die Gehäusewand 54 ist, wie in Figur 7 gezeigt, in dem Bereich, der den 12 Filterelementaufnahmen 42 gegenüber liegt, aus einem Blech gebildet und bildet somit eine Tür, die in einem Stück geöffnet bzw. abgenommen werden kann, um die Filterelemente 10 in die jeweils zugehörige Öffnung 44 der Filterelementaufnahme 42 einzusetzen und das Filterelement 10 mit seinem Filterelementkopf 20 an dem Reinfluidsammelkanal 12 zu befestigen. Alternativ oder zusätzlich kann die Gehäusewand 54 eine nicht gezeigte Montageöffnung aufweisen, um das Filterelement 10 durch die Montageöffnung hindurch in die Öffnung 44 der Filterelementaufnahme 42 zu schieben und das Filterelement 10 mit seinem Filterelementkopf 20 an dem Reinfluidsammelkanal 12 zu befestigen. Die Gehäusewand 54 kann dabei bevorzugt so angeordnet sein, dass die darin ausgebildete Montageöffnung der Filterelementaufnahme 42 gegenüber liegt. Die Montageöffnung kann mit einem Schieber, einer Klappe, oder einem Deckel verschlossen werden, so dass im Betrieb kein Reinfluid aus dem Reinfluidsammelkanal 12 austreten kann.

In Figur 8 ist ein unteres Ende des Reinfluidsammelkanals 12 aus Figur 7 im Detail dargestellt. Zwei Filterelemente 10 sind in Figur 8 nur teilweise in die Öffnung 44 der Filterelementaufnahme 42 eingeschoben, um den reinfluidseitigen Einbau bzw. Ausbau der Filterelemente 10 zu verdeutlichen. In einer Einsatzposition ist der Filterelementkopf 20 dann in dem Aufnahmeraum der Filterelementaufnahme 42 aufgenommen und liegt dichtend an dem jeweiligen Kragen 46 an.

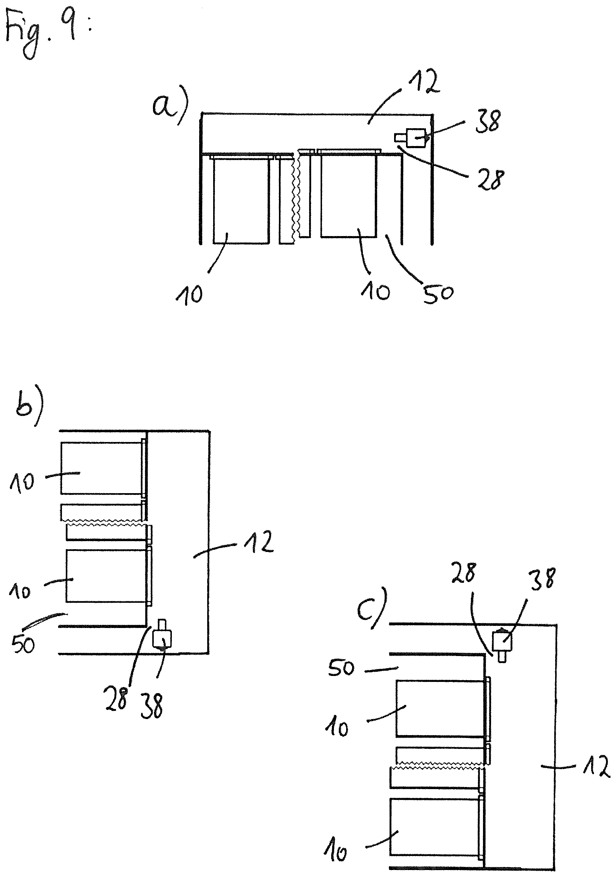

Figur 9 zeigt in ihren Teilfiguren 9a), 9b) und 9c) unterschiedliche räumliche Ausrichtungen der erfindungsgemäßen Filtervorrichtung 2 und zusätzlich schematisch einen rohfluidseitigen und einen reinfluidseitigen Einbau der Filterelemente 10 in den räumlich unterschiedlich ausgerichteten Reinfluidsammelkanal 12. In den Teilfiguren ragt der Filterkörper der Filterelemente 10 in den Rohfluidraum 50 hinein.

Figur 9a) zeigt den Reinfluidsammelkanal 12 in horizontaler Ausrichtung. Die Filterelemente 10 sind hängend in dem Reinfluidsammelkanal 12 angeordnet, wobei das linke Filterelement 10 rohfluidseitig in den Reinfluidsammelkanal 12 eingesetztist und das rechte Filterelement 10 reinfluidseitig in den Reinfluidsammelkanal 12 eingesetzt ist. Der Druckluft-Zuführkanalauslass 38 ist rechts von dem Reinfluidsammelkanal 12 nahe des Reinfluidsammelkanalauslasses 28 angeordnet, wo das Reinfluid den Reinfluidsammelkanal 12 im Normalbetrieb verlässt.

Figur 9b) zeigt den Reinfluidsammelkanal 12 in vertikaler Ausrichtung. Die Filterelemente 10 sind orthogonal zu der vertikalen Ausrichtung des Reinfluidsammelkanals 12 angeordnet, so dass sich die Längsrichtung der Filterelemente 10 horizontal erstreckt. Das obere Filterelement 10 ist rohfluidseitig in den Reinfluidsammelkanal 12 eingesetzt, und das untere Filterelement 10 ist reinfluidseitig in den Reinfluidsammelkanal 12 eingesetzt. Der Druckluft-Zuführkanalauslass 38 ist unten gegenüber dem Reinfluidsammelkanalauslass 28 des Reinfluidsammelkanals 12 angeordnet.

Figur 9c) zeigt den Reinfluidsammelkanal 12 in vertikaler Ausrichtung. Die Filterelemente 10 sind orthogonal zu der vertikalen Ausrichtung des Reinfluidsammelkanals 12 angeordnet. Das untere Filterelement 10 ist rohfluidseitig in den Reinfluidsammelkanal 12 eingesetzt, und das obere Filterelement 10 ist reinfluidseitig in den Reinfluidsammelkanal 12 eingesetzt. Der Druckluft-Zuführkanalauslass 38 ist oben gegenüber des Reinfluidsammelkanalauslasses 28 des Reinfluidsammelkanals 12 angeordnet.

Die Filtervorrichtung 2 weist darüber hinaus ein Filtergehäuse 52 auf, welches die Filterelemente 10, und den Reinfluidsammelkanal 12 oder die Reinfluidsammelkanäle 12 umgibt. Das Filtergehäuse 52 verfügt über einen Rohfluideinlass 56, um Rohfluid in den Rohfluidraum 50 und zu den Filterelementen 10 zu führen. Das so zugeführte Rohfluid wird dann durch die Filterelemente 10 gefiltert und als Reinfluid aus der Filtervorrichtung 2 und über einen Reinfluidauslass 58 im Filtergehäuse 52 ausgetragen.

In den Figuren 1 bis 5 sind die Reinfluidsammelkanäle 12 so angeordnet, dass die Reinfluidsammelkanalauslässe 28 auf den Figuren nach unten weisen. Dies ist eine beispielhafte Einbausituation und soll nicht als Einschränkung für den Einsatz der erfindungsgemäßen Filtervorrichtung 2 angesehen werden. Genauso gut kann der Reinfluidsammelkanalauslass 28 nach oben weisen, wie in den Figuren 6 bis 8 dargestellt, oder zur Seite weisen.

Die genannten Ausführungsbeispiele sind lediglich als Beispiel zu verstehen. Insbesondere können in weiteren Ausführungsbeispielen eine andere Anzahl an Filterelementen, eine andere Anzahl an Reinfluidsammelkanälen, eine andere Anordnung der Filterelemente an dem oder an den Reinfluidsammelkanälen, eine andere Anzahl an Reinfluidplenen, und/oder eine andere Anzahl von Druckluftzuführkanälen für die erfindungsgemäße Filtervorrichtung verwendet werden.

## Patentansprüche

1. Filtervorrichtung (2) aufweisend:
wenigstens ein zum Filtern eines Rohfluids ausgebildetes Filterelement (10) mit einer Rohfluidseite und einer Reinfluidseite, welches einen auf der Reinfluidseite angeordneten und sich in einer ersten Ebene erstreckenden Reinfluidauslass (22) aufweist, durch welchen Reinfluid aus dem Filterelement (10) herausgeführt wird;
wenigstens einen Reinfluidsammelkanal (12), in den der Reinfluidauslass (22) mündet; und
wenigstens eine Druckluft-Abreinigungsvorrichtung (15), die dazu ausgebildet ist, einen Druckimpuls zur Abreinigung von an dem Filterelement (10) anhaftenden Fremdstoffen zu erzeugen und durch den Reinfluidauslass (22) zu dem Filterelement (10) zu führen,
wobei die Druckluft-Abreinigungsvorrichtung (15) dazu ausgebildet ist, den Druckimpuls wenigstens annähernd entlang der ersten Ebene zum Reinfluidauslass (22) zu führen;
**dadurch gekennzeichnet, dass** die Druckluft-Abreinigungsvorrichtung (15) einen einem Reinfluidsammelkanalauslass (28) zugeordneten Druckluftzuführkanal (36) aufweist, der zu Beaufschlagung des Reinfluidsammelkanals (12) mit Druckimpulsen ausgebildet ist, wobei ein Austrittsende für Druckimpulse des Druckluftzuführkanals (36) dem Reinfluidsammelkanalauslass (28) des Reinfluidsammelkanals (12) über einen Zwischenraum hinweg gegenüber liegt, wobei der Zwischenraum so groß gewählt ist, dass ein jeweiliger Druckimpuls im Zuge seiner Bewegung zwischen Austrittsende des Druckluftzuführkanals und Reinfluidsammelkanalauslass seine Druckimpulsfläche vergrößert.

2. Filtervorrichtung (2) nach Anspruch 1, wobei das Filterelement (10) eine durch Filterflächen gebildete Filtertasche oder Patrone bildet mit einer offenen Seite, die den Reinfluidauslass (22) bildet.

3. Filtervorrichtung (2) nach einem der vorherigen Ansprüche, wobei das wenigstens eine Filterelement (10) als Starrkörperfilter ausgebildet ist, wobei insbesondere das wenigstens eine Filterelement (10) einen durchströmungsporösen Filterkörper aus einem gesinterten Material aufweist, wobei das gesinterte Material insbesondere einen gesinterten Kunststoff als Hauptbestandteil aufweist, insbesondere gesinterte Polyethylen-Partikel oder gesinterte Polyphenylensulfid-Partikel als Hauptbestandteil.

4. Filtervorrichtung (2) nach einem der vorherigen Ansprüche, wobei das wenigstens eine Filterelement (10) eine kastenartige Gestalt aufweist, mit zwei breiten Seitenwänden (16) und zwei schmalen Seitenwänden (18), die sich von dem Reinfluidauslass (22) zu einem gegenüber liegenden Ende erstrecken, wobei insbesondere das gegenüber liegende Ende geschlossen ist, wobei ferner insbesondere das wenigstens eine Filterelement (10) so angeordnet ist, dass die zwei breiten Seitenwände (16) sich parallel zu der Strömungsrichtung des Reinfluids stromabwärts des Reinfluidauslasses (22) erstrecken, und/oder wobei die breiten Seitenwände (16) parallel zu der Richtung des zum Reinfluidauslass (22) laufenden Druckimpulses ausgerichtet sind.

5. Filtervorrichtung (2) nach einem der vorherigen Ansprüche, wobei sich der Reinfluidsammelkanal (12) wenigstens annähernd parallel zu der ersten Ebene erstreckt.

6. Filtervorrichtung (2) nach Anspruch 5, wobei der Reinfluidsammelkanal (12) ein Hohlkörper ist, der sich von einem geschlossenen Ende (26) zu einem offenen Ende erstreckt, und/oder
wobei der Reinfluidsammelkanal (12) einen Querschnitt aufweist, der sich in Strömungsrichtung des vom Filterelement (10) abströmenden Reinfluids stromabwärts des Reinfluidauslasses (22) vergrößert, insbesondere sich stetig von einem stromaufwärts liegenden ersten Ende (26) zu einem stromabwärts liegenden zweiten Ende vergrößert, und/oder wobei der Reinfluidsammelkanal (12) einen viereckigen, weitgehend ovalen oder weitgehend runden Hohlraumquerschnitt aufweist.

7. Filtervorrichtung (2) nach einem der Ansprüche 1 bis 6, aufweisend zwei oder mehr Filterelemente (10), wobei die Filterelemente (10) aufeinander folgend angeordnet sind, bezogen auf die Strömungsrichtung des vom Filterelement (10) abströmenden Reinfluids stromäbwärts des Reinfluidauslasses (22), und/oder wobei die zwei oder mehr Filterelemente (10) entlang des Reinfluidsammelkanals (12) nacheinander angeordnet sind.

8. Filtervorrichtung (2) nacheinem der Ansprüche 1 bis 7, wobei der Druckluftzuführkanal (36) an einer stromabwärts des letzten Filterelements (10) liegenden Stelle angeordnet ist, bezogen auf die Strömungsrichtung des vom Filterelement (10) abströmenden Reinfluids stromabwärts des Reinfluidauslasses (22).

9. Filtervorrichtung (2) nach einem der Ansprüche 1 bis 8, wobei die Druckluft-Abreinigungsvorrichtung (15) dazu ausgebildet ist, den Druckimpuls entgegen einer Strömungsrichtung des Reinfluids in den Reinfluidsammelkanal (12) einzuleiten, bezogen auf die Strömungsrichtung des Reinfluids stromabwärts des Reinfluidauslasses (22).

10. Filtervorrichtung (2) nach einem der Ansprüche 1 bis 9, weiterhin aufweisend wenigstens zwei Reinfluidsammelkanäle (12) mit jeweils wenigstens einem dem Reinfluidsammelkanal (12) zugeordneten Filterelement (10), wobei die wenigstens zwei Reinfluidsammelkanäle (12) in ein gemeinsames Reinfluidplenum (14) münden.

11. Filtervorrichtung (2) nach Anspruch 10, wobei jedem der wenigstens zwei Reinfluidsammelkanäle (12) ein entsprechender Druckluftzuführkanal (36) der Druckluft-Abreinigungsvorrichtung (15) zugeordnet ist,

12. Filtervorrichtung (2) nach Anspruch 10 oder 11, wobei der jeweilige Druckluftzuführkanal (36) der Druckluft-Abreinigungsvorrichtung (15) über einen Druckluftzuführkanalausgang (38) in das Reinfluidplenum (14) mündet, wobei insbesondere der Druckluftzuführkanal (36) gegenüber dem Reinfluidsammelkanalauslass (28) des zugeordneten Reinfluidsammelkanals (12) in das Reinfluidplenum (14) mündet.

13. Filtervorrichtung (2) nach einem der Ansprüche 1 bis 12, wobei der Druckluftzuführkanal (36) über ein Steuerelement (40) verfügt, welches so ausgebildet ist, dass es eine Druckluftzufuhr in den entsprechenden Reinfluidsammelkanal (12) steuert, und/oder wobei der Reinfluidsammelkanal (12) über wenigstens eine Filterelementaufnahme (42) verfügt, in die das Filterelement (10) einschiebbar ist, wobei insbesondere die Filterelementaufnahme (42) eine im Reinfluidsammelkanal (12) ausgebildete Öffnung aufweist, welche einen Querschnitt entsprechend einem Filterelementkopf (20) des Filterelements (10) aufweist, so dass der Filterelementkopf (20) in diese Öffnung einschiebbar ist, und/oder wobei der wenigstens eine Reinfluidsammelkanal (12) eine der Filterelementaufnahme (42) zugeordnete Montageöffnung aufweist, durch die das Filterelement (10) in die Filterelementaufnahme (42) einsetzbar ist und/oder aus der Filterelementaufnahme (42) herausnehmbar ist, wobei insbesondere die Montageöffnung in einer der Filterelementaufnahme (42) gegenüber liegenden Wand des Reinfluidsammelkanals (12) angeordnet ist,und/oder wobei die Montageöffnung mit einer Klappe, einer Tür, einem abnehmbaren Deckel, oder einem Schieber verschließbar ist, und/oder wobei die Filtervorrichtung (2) ein Gehäuse (52) aufweist und die Montageöffnung in dem Gehäuse (52) der Filtervorrichtung (2) angeordnet ist.

14. Filtervorrichtung (2) nach einem der vorherigen Ansprüche, wobei das wenigstens eine Filterelement (10) einstückig ausgebildet ist.

15. Verfahren zum Abreinigen des Filterelements (10) der Filtervorrichtung (2) nach einem der vorherigen Ansprüche, aufweisend:
Einleiten wenigstens eines Druckimpulses entgegen einer Strömungsrichtung des vom Filterelement (10) weg strömenden Reinfluids durch einen auf der Reinfluidseite angeordneten und sich in einer ersten Ebene erstreckenden Reinfluidauslass (22), derart, dass der Druckimpuls beim Passieren des Reinfluidauslasses (22) eine Umlenkung um wenigstens 60°, insbesondere eine Umlenkung von wenigstens annähernd 80°, insbesondere eine Umlenkung um wenigstens annähernd 90° erfährt, wobei der Druckimpuls in wenigstens einen Reinfluidsammelkanal (12), in den der Reinfluidauslass (22) mündet; eingeleitet wird, wobei der Druckimpuls durch Beaufschlagen eines dem Reinfluidsammelkanal (12) zugeordneten Reinfluidsammelkanalauslasses (28) mittels eines Druckluftzuführkanals (36) eingeleitet wird, wobei ein Austrittsende für Druckimpulse des Druckluftzuführkanals (36) dem Reinfluidsammelkanalauslass (28) des Reinfluidsammelkanals (12) über einen Zwischenraum hinweg gegenüber liegt, wobei der Zwischenraum so groß gewählt wird, dass ein jeweiliger Druckimpuls im Zuge seiner Bewegung zwischen Austrittsende des Druckluftzuführkanals und Reinfluidsammelkanalauslass seine Druckimpulsfläche vergrößert.

## Claims

1. A filter device (2) comprising:
at least one filter element (10) adapted to filter a raw fluid and having a raw fluid side and a clean fluid side, said filter element (10) having a clean fluid outlet (22) arranged on the clean fluid side and extending in a first plane, through which clean fluid is conducted out of said filter element (10);
at least one clean fluid collecting channel (12) into which the clean fluid outlet (22) opens; and
at least one compressed-air cleaning-off device (15) adapted to generate a pressure pulse for cleaning-off foreign matter adhering to the filter element (10) and to conduct the same through the clean fluid outlet (22) to the filter element (10),
wherein the compressed-air cleaning-off device (15) is adapted to conduct the pressure pulse at least approximately along the first plane to the clean fluid outlet (22);
**characterized in that** the compressed-air cleaning-off device (15) comprises a compressed-air supply channel (36) associated with a clean fluid collecting channel outlet (28) and adapted to charge the clean fluid collecting channel (12) with pressure pulses, wherein an outlet end for pressure pulses of the compressed-air supply channel (36) is arranged opposite the clean fluid collecting channel outlet (28) of the clean fluid collecting channel (12) across a space, wherein the size of said space is selected such that a respective pressure pulse increases its pressure pulse area in the course of its travel between the outlet end of the compressed-air supply channel and the clean fluid collecting channel outlet.

2. The filter device (2) according to claim 1,
wherein the filter element (10) forms a filter pocket or cartridge formed by filter surfaces, with an open side forming the clean fluid outlet (22).

3. The filter device (2) according to any of the preceding claims,
wherein the at least one filter element (10) is formed as a rigid-body filter, wherein in particular the at least one filter element (10) comprises a throughflow-porous filter body made of a sintered material, wherein the sintered material comprises in particular a sintered plastic as main constituent, in particular sintered polyethylene particles or sintered polyphenylene sulfide particles as main constituent.

4. The filter device (2) according to any of the preceding claims,
wherein the at least one filter element (10) has a box-like shape, with two wide sidewalls (16) and two narrow sidewalls (18) extending from the clean fluid outlet (22) to an opposite end, wherein in particular the opposite end is closed, wherein further in particular the at least one filter element (10) is arranged such that the two wide sidewalls (16) extend parallel to the direction of flow of the clean fluid downstream of the clean fluid outlet (22) and/or wherein the wide sidewalls (16) are oriented parallel to the direction of the pressure pulse traveling toward the clean fluid outlet (22).

5. The filter device (2) according to any of the preceding claims,
wherein the clean fluid collecting channel (12) extends at least approximately parallel to the first plane.

6. The filter device (2) according to claim 5,
wherein the clean fluid collecting channel (12) is a hollow body extending from a closed end (26) to an open end, and/or
wherein the clean fluid collecting channel (12) has a cross-section that increases in the direction of flow of the clean fluid flowing away from the filter element (10) downstream of the clean fluid outlet (22), in particular increases steadily from an upstream first end (26) to a downstream second end, and/or wherein the clean fluid collecting channel (12) has a square, substantially oval or substantially round cavity cross-section.

7. The filter device (2) according to any of claims 1 to 6,
comprising two or more filter elements (10), wherein the filter elements (10) are arranged following each other with respect to the direction of flow of the clean fluid flowing away from the filter element (10) downstream of the clean fluid outlet (22), and/or wherein the two or more filter elements (10) are arranged one after the other along the clean fluid collecting channel (12).

8. The filter device (2) according to any of claims 1 to 7,
wherein the compressed-air supply channel (36) is arranged at a location downstream of the last filter element (10), with respect to the direction of flow of the clean fluid flowing away from the filter element (10) downstream of the clean fluid outlet (22).

9. The filter device (2) according to any of claims 1 to 8,
wherein the compressed-air cleaning-off device (15) is adapted to introduce the pressure pulse into the clean fluid collecting channel (12) against a direction of flow of the clean fluid with respect to the direction of flow of the clean fluid downstream of the clean fluid outlet (22).

10. The filter device (2) according to any of claims 1 to 9,
further comprising at least two clean fluid collecting channels (12), each having at least one filter element (10) associated with the clean fluid collecting channel (12), wherein the at least two clean fluid collecting channels (12) open into a common clean fluid plenum (14).

11. The filter device (2) according to claim 10,
wherein a corresponding compressed-air supply channel (36) of the compressed-air cleaning-off device (15) is associated with each of the at least two clean fluid collecting channels (12).

12. The filter device (2) according to claim 10 or 11,
wherein the respective compressed-air supply channel (36) of the compressed-air cleaning-off device (15) opens into the clean fluid plenum (14) via a compressed-air supply channel outlet (38), wherein in particular the compressed-air supply channel (36) opens into the clean fluid plenum (14) opposite the clean fluid collecting channel outlet (28) of the associated clean fluid collecting channel (12).

13. The filter device (2) according to any of claims 1 to 12,
wherein the compressed-air supply channel (36) has a control element (40) configured to control a supply of compressed air into the corresponding clean fluid collecting channel (12) and/or wherein the clean fluid collecting channel (12) has at least one filter element receptacle (42) into which the filter element (10) can be slidably inserted, wherein in particular the filter element receptacle (42) has an opening formed in the clean fluid collecting channel (12), which opening has a cross-section corresponding to a filter element head (20) of the filter element (10), so that the filter element head (20) can be slidably inserted into said opening, and/or wherein the at least one clean fluid collecting channel (12) has a mounting opening associated with the filter element receptacle (42), through which the filter element (10) can be inserted into the filter element receptacle (42) and/or can be removed from the filter element receptacle (42), wherein in particular the mounting opening is arranged in a wall of the clean fluid collecting channel (12) located opposite the filter element receptacle (42), and/or wherein the mounting opening is closable with a flap, a door, a removable cover, or a slide, and/or wherein the filter device (2) comprises a housing (52) and the mounting opening is arranged in the housing (52) of the filter device (2).

14. The filter device (2) according to any of the preceding claims,
wherein the at least one filter element (10) is formed integrally.

15. A method of cleaning-off the filter element (10) of the filter device (2) according to any of the preceding claims, comprising:
introducing at least one pressure pulse counter to a direction of flow of the clean fluid flowing away from the filter element (10) through a clean fluid outlet (22) arranged on the clean fluid side and extending in a first plane, such that the pressure pulse undergoes a deflection by at least 60°, in particular a deflection of at least approximately 80°, in particular a deflection by at least approximately 90°, when passing through the clean fluid outlet (22), wherein the pressure pulse is introduced into at least one clean fluid collecting channel (12) into which the clean fluid outlet (22) opens, wherein the pressure pulse is introduced by acting upon a clean fluid collecting channel outlet (28), which is associated with the clean fluid collecting channel (12), by means of a compressed-air supply channel (36), wherein an outlet end for pressure pulses of the compressed-air supply channel (36) is arranged opposite the clean fluid collecting channel outlet (28) of the clean fluid collecting channel (12) across a space, wherein the size of said space is selected such that a respective pressure pulse increases its pressure pulse area in the course of its travel between the outlet end of the compressed-air supply channel and the clean fluid collecting channel outlet.

## Revendications

1. Dispositif filtrant (2) présentant :
au moins un élément filtrant (10) conçu pour filtrer un fluide brut avec un côté de fluide brut et un côté de fluide purifié, qui présente une sortie de fluide purifié (22) disposée sur le côté de fluide purifié et s'étendant sur un premier plan, à travers laquelle le fluide purifié est conduit hors de l'élément filtrant (10) ;
au moins un canal de collecte de fluide purifié (12) dans lequel débouche la sortie de fluide purifié (22) ; et
au moins un dispositif de nettoyage à air comprimé (15), qui est conçu pour générer une impulsion de pression pour le nettoyage de substances étrangères adhérant à l'élément filtrant (10) et pour les amener vers l'élément filtrant (10) par la sortie de fluide purifié (22),
le dispositif de nettoyage à air comprimé (15) étant conçu pour guider l'impulsion de pression au moins approximativement le long du premier plan vers la sortie de fluide purifié (22) ;
**caractérisé en ce que** le dispositif de nettoyage à air comprimé (15) présente un canal d'amenée d'air comprimé (36) associé à une sortie de canal collecteur de fluide purifié (28), lequel est conçu pour alimenter le canal collecteur de fluide purifié (12) d'impulsions de pression, une extrémité de sortie pour les impulsions de pression du canal d'amenée d'air comprimé (36) étant située en face de la sortie (28) du canal collecteur de fluide purifié (12), séparée par un espace intermédiaire, l'espace intermédiaire étant choisi suffisamment grand pour qu'une impulsion de pression augmente sa surface d'impulsion de pression au cours de son déplacement entre l'extrémité de sortie du canal d'amenée d'air comprimé et la sortie du canal collecteur de fluide purifié.

2. Le dispositif filtrant (2) selon la revendication 1, dans lequel l'élément filtrant (10) forme une poche filtrante ou une cartouche formée par des surfaces filtrantes avec un côté ouvert formant la sortie de fluide purifié (22).

3. Le dispositif filtrant (2) selon l'une quelconque des revendications précédentes, dans lequel l'élément filtrant (10), un au moins, est réalisé sous la forme d'un filtre à corps rigide, dans lequel en particulier l'élément filtrant (10), un au moins, présente un corps filtrant à pores traversants dans un matériau fritté, le matériau fritté présentant en particulier une matière plastique frittée comme composant principal, en particulier des particules de polyéthylène frittées ou des particules de sulfure de polyphénylène frittées comme composant principal.

4. Le dispositif filtrant (2) selon l'une quelconque des revendications précédentes, dans lequel l'élément filtrant (10), un au moins, a une forme de boîte, avec deux parois latérales larges (16) et deux parois latérales étroites (18) s'étendant depuis la sortie de fluide purifié (22) vers une extrémité opposée, l'extrémité opposée étant en particulier fermée, l'élément filtrant (10), un au moins, étant en outre, en particulier, disposé de telle sorte que les deux parois latérales larges (16) s'étendent parallèlement à la direction d'écoulement du fluide purifié en aval de la sortie de fluide purifié (22), et/ou dans lequel les parois latérales larges (16) sont orientées parallèlement à la direction de l'impulsion de pression circulant vers la sortie de fluide purifié (22).

5. Le dispositif filtrant (2) selon l'une quelconque des revendications précédentes, dans lequel le canal collecteur de fluide purifié (12) s'étend de manière au moins approximativement parallèle au premier plan.

6. Le dispositif filtrant (2) selon la revendication 5, dans lequel le canal collecteur de fluide purifié (12) est un corps creux qui s'étend d'une extrémité fermée (26) vers une extrémité ouverte, et/ou
dans lequel le canal collecteur de fluide purifié (12) présente une section transversale qui augmente dans le sens d'écoulement du fluide purifié s'écoulant de l'élément filtrant (10) en aval de la sortie de fluide purifié (22), en particulier qui augmente en continu d'une première extrémité (26) située en amont à une deuxième extrémité située en aval, et/ou dans lequel le canal collecteur de fluide purifié (12) présente une section transversale de cavité quadrangulaire, largement ovale ou largement ronde.

7. Le dispositif filtrant (2) selon l'une quelconque des revendications 1 à 6, présentant deux ou plusieurs éléments filtrants (10), dans lequel les éléments filtrants (10) sont disposés successivement par rapport à la direction d'écoulement du fluide purifié s'écoulant de l'élément filtrant (10) en aval de la sortie de fluide purifié (22), et/ou dans lequel les deux ou plusieurs éléments filtrants (10) sont disposés successivement le long du canal collecteur de fluide purifié (12).

8. Le dispositif filtrant (2) selon l'une quelconque des revendications 1 à 7, dans lequel le canal d'amenée d'air comprimé (36) est disposé à un emplacement situé en aval du dernier élément filtrant (10), par rapport à la direction d'écoulement du fluide purifié s'écoulant de l'élément filtrant (10) en aval de la sortie de fluide purifié (22).

9. Le dispositif filtrant (2) selon l'une quelconque des revendications 1 à 8, dans lequel le dispositif de nettoyage à air comprimé (15) est conçu de manière à introduire l'impulsion de pression dans le canal collecteur de fluide purifié (12) en sens inverse d'une direction d'écoulement du fluide purifié, par rapport à la direction d'écoulement du fluide purifié en aval de la sortie de fluide purifié (22).

10. Le dispositif filtrant (2) selon l'une quelconque des revendications 1 à 9, présentant en outre au moins deux canaux collecteurs de fluide purifié (12) avec chacun au moins un élément filtrant (10) associé au canal collecteur de fluide purifié (12), les au moins deux canaux collecteurs de fluide purifié (12) débouchant dans un plénum de fluide purifié commun (14).

11. Le dispositif filtrant (2) selon la revendication 10, dans lequel à chacun des au moins deux canaux collecteurs de fluide purifié (12) est associé un canal d'amenée d'air comprimé (36) correspondant du dispositif de nettoyage à air comprimé (15).

12. Le dispositif filtrant (2) selon la revendication 10 ou 11, dans lequel le canal d'amenée d'air comprimé (36) respectif du dispositif de nettoyage à air comprimé (15) débouche dans le plénum de fluide purifié (14) par l'intermédiaire d'une sortie du canal d'amenée d'air comprimé (38), dans lequel en particulier le canal d'amenée d'air comprimé (36) débouche dans le plénum de fluide purifié (14) en regard de la sortie de canal collecteur de fluide purifié (28) du canal collecteur de fluide purifié (12) associé.

13. Le dispositif filtrant (2) selon l'une quelconque des revendications 1 à 12, dans lequel le canal d'amenée d'air comprimé (36) dispose d'un élément de commande conçu de manière à commander une amenée d'air comprimé dans le canal collecteur de fluide purifié correspondant (12), et/ou dans lequel le canal collecteur de fluide purifié (12) dispose d'au moins un logement d'élément filtrant (42) dans lequel l'élément filtrant (10) peut être inséré,
dans lequel, en particulier, le logement d'élément filtrant (42) présente une ouverture formée dans le canal collecteur de fluide purifié (12), laquelle présente une section transversale correspondant à une tête d'élément filtrant (20) de l'élément filtrant (10), de sorte que la tête d'élément filtrant (20) peut être insérée dans cette ouverture, et/ou dans lequel le canal collecteur de fluide purifié (12), un au moins, présente une ouverture de montage associée au logement d'élément filtrant (42), à travers laquelle l'élément filtrant (10) peut être inséré dans le logement d'élément filtrant (42) et/ou retiré du logement d'élément filtrant (42), dans lequel en particulier l'ouverture de montage est disposée sur une paroi du canal collecteur de fluide purifié (12) faisant face au logement d'élément de filtre (42) et où l'ouverture de montage peut être fermée par un clapet, une porte, un couvercle amovible ou un coulisseau, et/ou dans lequel le dispositif filtrant (2) présente un boîtier (52) et où l'ouverture de montage est disposée dans le boîtier (52) du dispositif filtrant (2).

14. Le dispositif filtrant (2) selon l'une quelconque des revendications précédentes, dans lequel l'élément filtrant (10), un au moins, est formé d'une seule pièce.

15. Méthode de nettoyage de l'élément filtrant (10) du dispositif filtrant (2) selon l'une quelconque des revendications précédentes, consistant à :
introduire au moins une impulsion de pression à l'encontre d'une direction d'écoulement du fluide purifié s'écoulant depuis l'élément filtrant (10) à travers une sortie de fluide purifié (22) disposée du côté du fluide purifié et s'étendant sur un premier plan, de telle sorte que l'impulsion de pression subit, lors du passage de la sortie de fluide purifié (22), une déviation d'au moins 60°, en particulier une déviation d'au moins environ 80°, en particulier une déviation d'au moins environ 90°, l'impulsion de pression étant introduite dans au moins un canal collecteur de fluide purifié (12), dans lequel débouche la sortie de fluide purifié (22), l'impulsion de pression étant introduite en sollicitant une sortie de canal collecteur de fluide purifié (28) associée au canal collecteur de fluide purifié (12) au moyen d'un canal d'amenée d'air comprimé (36), une extrémité de sortie des impulsions de pression du canal d'amenée d'air comprimé (36) étant située en face de la sortie de canal collecteur de fluide purifié (28) du canal collecteur de fluide purifié (12), séparée par un espace intermédiaire, l'espace intermédiaire étant choisi suffisamment grand pour qu'une impulsion de pression augmente sa surface d'impulsion de pression au cours de son déplacement entre l'extrémité de sortie du canal d'amenée d'air comprimé et la sortie du canal collecteur de fluide purifié.
